# EUROPÄISCHE PATENTSCHRIFT

(11) **EP 2 100 107 B1**
(45) Veröffentlichungstag und Bekanntmachung des Hinweises auf die Patenterteilung: **20.12.2017**
(21) Anmeldenummer: 07822839.2
(22) Anmeldetag: 23.11.2007
(51) Int. Cl.: G01F 13/00, G01G 13/02, A61J 3/00, B65B 1/12

(54) **DOSIERVORRICHTUNG FÜR PULVER- ODER PASTENFÖRMIGES DOSIERGUT**
METERING APPARATUS FOR PULVERULENT OR PASTY METERABLE MATERIAL
DISPOSITIF DE DOSAGE POUR PRODUIT PULVÉRULENT OU PÂTEUX

(30) Priorität: 07.12.2006 EP 06125585
(43) Veröffentlichungstag der Anmeldung: 16.09.2009
(73) Patentinhaber: Mettler-Toledo GmbH, 8606 Greifensee (CH)
(72) Erfinder: LÜCHINGER, Paul, 8610 Uster (CH); EHRBAR, Sandra, 8605 Gutenswil (CH); ZEHNDER, Marc, 8604 Volketswil (CH)
(74) Vertreter: Mettler-Toledo
(86) Internationale Anmeldenummer: PCT/EP2007/062741
(87) Internationale Veröffentlichungsnummer: WO 2008/068147

(56) Entgegenhaltungen:
- EP-A2- 1 334 906
- WO-A-02/44669
- WO-A-95/18365
- DE-A1- 19 841 478
- GB-A- 1 459 394

## Beschreibung

Die vorliegende Erfindung bezieht sich auf eine Dosiervorrichtung für pulver- oder pastenförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches einen Dosierkopf aufweist. Dabei ist es wünschenswert, die zu dosierende Substanz durch eine kleine Öffnung der Dosiervorrichtung auszutragen, so dass sie auch gezielt in ein Gefäss mit einem kleinen Öffnungsquerschnitt abgefüllt werden kann.

Dosiervorrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Entnahmegefäss mit einem verschliessbaren Auslass an seiner Unterseite besteht. Als Verschlusselement dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt. Ferner wird das Entnahmegefäss von einer Verschlusswelle durchdrungen, welche an der Oberseite des Entnahmegefässes über dieses hinausragt und mit der Antriebswelle eines Antriebs koppelbar ist. Das Entnahmegefäss ist durch einen Befestigungsflansch an seiner Unterseite mit der Dosiervorrichtung verbunden. Auf den Deckel des Entnahmegefässes wirken mehrere Druckzylinder, über deren Hub die Auslassöffnung und damit die Fördermenge aus dem Entnahmegefäss beeinflusst werden kann. Die vertikale Anordnung der Verschlusswelle ist ausserordentlich wichtig, sofern stark koagulierende Pulver oder pastenförmiges Dosiergut dosiert werden sollen, da der Materialfluss im Behälter in der vertikalen Richtung erfolgt und damit durch die Schwerkraft unterstützt wird.

Zum nachfüllen ist der Dosierkopf zusammen mit dem Entnahmegefäss aus der Antriebsvorrichtung entfernbar. Aufgrund der im Entnahmegefäss geführten Antriebswelle gestaltet sich aber der Nachfüllprozess recht schwierig, insbesondere beim Nachfüllen toxischer Substanzen oder beim Nachfüllen von Substanzen für Heilmittel, bei denen eine Kontamination für die Anwender des Heilmittels eine Gefahr darstellen könnte.

Um diesem Problem zu begegnen ist in EP 0 234 332 A1 eine Dosiervorrichtung offenbart, die ein Entnahmegefäss aufweist, mit dessen unterer Seite ein Dosierkopf und mit dessen oberer Seite eine Antriebseinheit verbunden ist. Ferner weist das Entnahmegefäss einen seitlich herausragenden Stutzten auf, über welchen das Entnahmegefäss befüllt werden kann. Auch in dieser Dosiervorrichtung ist die Antriebsachse innerhalb des Entnahmegefässes angeordnet.

Der grösste Problembereich der beiden vorangehend beschriebenen Lösungen ist die Lager- und Durchtrittsstelle der Antriebswelle. Sofern Dosiergut in die Lager- und Durchtrittsstelle eindringt, kann dies bei Dosiergut mit sehr harten Partikeln zu grossem Verschleiss in der Lagerstelle führen. Die Antriebswelle kann dadurch blockiert werden und durch den Verschleiss besteht die Gefahr, dass Abrieb das Dosiergut kontaminieren kann oder dass durch zunehmendes Lagerspiel infolge des Verschleisses die Präzision des Dosierkopfs beeinträchtigt wird. Besonders gefährlich ist eine Blockierung der Antriebswelle dann, wenn diese im geöffneten Zustand erfolgt und sich das Dosiergut in unkontrollierbarer Weise aus dem Dosierkopf in die Umgebung ergiesst. Weiche Pulver könnten in der Lagerstelle ultrafein zermahlen werden und durch die Lager- und Durchtrittstelle unkontrolliert in die Umgebung gelangen und diese kontaminieren. WO 95/18365 offenbart die Merkmale des Oberbegriffs des Anspruchs 1. Um eine Blockierung der Verschlusswelle in der Lager- und Durchtrittsstelle aufgrund von in die Lagerstelle eindringendem Dosiergut zu vermeiden, wird im Stand der Technik die Lager- und Durchtrittsstelle ausgehend vom höchstmöglichen Pulverniveau möglichst weit entfernt angeordnet. Ferner werden verschiedene elastische Kunststoff- Dichtungsmittel zur Abdichtung vorgesehen. Die Begrenzung des Pulverniveaus wird bei Vorrichtungen mit seitlichem Zufuhrstutzen durch den Zufuhrstutzen-Ansatz bestimmt. Diese Lösungen ergeben eine grosse Bauhöhe der Dosierköpfe, was zu erheblichen Baugrössen der Dosiervorrichtung und dementsprechend zu sehr teuren, unhandlichen Geräten führt. Ferner sind elastische Dichtungsmittel sehr erosionsanfällig, können durch im Dosiergut enthaltene Lösungsmittel angegriffen werden und eignen sich daher kaum zur dauerhaften Abdichtung einer Lager- und Durchtrittsstelle, in welcher eine Antriebswelle rotiert und translatorisch verschoben wird.

Angesichts der Probleme der vorangehend beschriebenen Dosiervorrichtungen und Dosierköpfe liegt der vorliegenden Erfindung daher die Aufgabe zugrunde, einen Dosierkopf beziehungsweise eine Dosiervorrichtung mit mindestens einem entsprechenden Dosierkopf zu schaffen, mit welchem Dosiergut ausdosiert werden kann, ohne dass durch Eindringen von Dosiergut in die Lager- und Durchtrittsstelle eine Kontaminationsgefahr für die Umgebung und/oder für das Dosiergut besteht. Ferner sollen das Entnahmegefäss und der Dosierkopf als geschlossene Einheit auf einfache Weise in die Antriebsvorrichtung eingesetzt beziehungsweise nach erfolgter Dosierung des Inhaltes von dieser getrennt werden können.

Diese Aufgabe wird mit einem Dosierkopf beziehungsweise mit einer Dosiervorrichtung, die diesen Dosierkopf beinhaltet, gelöst, welche die in den unabhängigen Patentansprüchen angegebenen Merkmale aufweisen.

Ein Dosierkopf für Pulver- oder pastenförmiges Dosiergut beinhaltet ein Gehäuse, welches eine Austrittsöffnung, eine Lager- und Durchtrittsstelle und mindestens eine am Gehäuse ausgebildete oder damit verbundenen Aufnahme zur Verbindung mindestens eines Entnahmegefässes mit dem Dosierkopf aufweist. Im Gehäuse ist mindestens ein Zufuhrschacht ausgebildet, welcher der Verbindung der mindestens einen Aufnahme mit der Austrittsöffnung dient. In der Lager- und Durchtrittsstelle ist ferner eine Verschlusswelle um ihre Mittellängsachse rotierbar und entlang ihrer Mittellängsachse verschiebbar gelagert und mit einem im Bereich der Austrittsöffnung angeordneten Verschlusselement verbunden. Durch die axiale Verschiebung der Verschlusswelle und des Verschlusselements wird die Austrittsöffnung mehr oder weniger weit geöffnet und dadurch der Volumenstrom des Dosiergutes durch die Austrittsöffnung gesteuert. Die Verschlusswelle weist einen die Verschiebung der Verschlusswelle entlang ihrer Mittellängsachse begrenzenden Anschlag auf. Im Zufuhrschacht ist ein der Definition der Verschlussposition dienender Gegenanschlag ausgebildet, in welcher Verschlussposition der Anschlag am Gegenanschlag anliegt und die Austrittsöffnung durch den Verschlussbereich des Verschlusselements verschlossen ist. Am Anschlag und/oder am Gegenanschlag ist mindestens eine der Entfernung von Dosiergut dienende Ausnehmung, Schälkante, Schabkante, Schabfläche oder Schnittkante ausgebildet.

Durch diese Anordnung wird zweierlei erreicht. Erstens kann die Lager- und Durchtrittsstelle durch die Anordnung einer Ausnehmung, Schälkante, Schabkante, Schabfläche oder Schnittkante am Anschlag und/oder am Gegenanschlag vor dem Eindringen von Pulverpartikeln geschützt werden. Infolge der Rotation und der linearen Verschiebung, insbesondere beim Schliessvorgang, wird durch diese Anodnung das am Verschlusswellen- Schaft anhaftende Dosiergut kontinuierlich abgeschält und aus der Lagerstellenzone gefördert. Zweitens ist die Verschlussposition genau definiert und erreichbar, da ein Anschlag und ein Gegenanschlag vorhanden sind und eine der Entfernung von Dosiergut zwischen dem Anschlag und dem Gegenanschlag dienende Ausnehmung, Schälkante, Schabkante, Schabfläche oder Schnittkante ausgebildet ist. Das Erreichen der Verschlussposition ist von grösster Bedeutung, damit nicht unkontrolliert Dosiergut aus dem Dosierkopf austreten kann.

Das Schabelement kann eine Kante sein, die durch eine Anfräsung des Anschlages ausgebildet werden kann. Selbstverständlich können an der Anschlagfläche und/oder an der Gegenanschlagfläche auch feine, spiralförmig verlaufende Nuten angeordnet sein. Durch diese Nuten kann das eingeklemmte Dosiergut infolge der durch die rotierende Verschlusswelle bewirkten Relativbewegung der Anschlagfläche zur Gegenanschlagfläche aus diesem Bereich gefördertwerden, bis die Anschlagsfläche an der Gegenanschlagfläche anliegt. Sofern sowohl der Anschlag wie auch der Gegenanschlag Schabkanten, Schnittkanten oder Schabflächen mit Nuten aufweisen, müssen die Teilungen zwischen den Nuten des Anschlags und den Nuten des Gegenanschlags so ausgelegt sein, dass beispielsweise die Erhebungen des Gegenanschlags nicht in die Nuten des Anschlages passen. Damit wird vermieden, dass der Anschlag und der Gegenanschlag einer Klauenkupplung ähnlich ineinander einrasten können und dadurch die Rotationsbewegung blockiert wird.

Um eine rasche Auswechselbarkeit des Dosierkopfs zu ermöglichen und eine grösstmögliche Sicherheit gegen ein unbeabsichtigtes Austragen von Dosiergut zu gewährleisten, ist die Verschlusswelle vorzugsweise mit einer im Gehäuse abgestützten Feder beaufschlagt. Mittels deren Federkraft kann das Verschlusselement in der Verschlussposition gehalten werden, auch wenn der Dosierkopf nicht mit der Dosiervorrichtung verbunden und die Verschlusswelle nicht mit einer Antriebswelle der Dosiervorrichtung gekuppelt ist. Somit schliesst der Verschlussbereich die Austragungsöffnung automatisch, wenn die Verschlusswelle von der Antriebswelle entkoppelt wird. Diese selbstschliessende Eigenschaft des Dosierkopfs dient insbesondere der Sicherheit im Umgang mit toxischen Substanzen, verhindert aber auch ein Eindringen von Verunreinigungen in das Entnahmegefäss beziehungsweise in den Dosierkopf.

Auch bei präzisester Fertigung der Verschlusswelle kann eine gewisse Exzentrizität der einzelnen Wellenabschnitte nicht vermieden werden. Um auch feinste Partikel abzustreifen und das Spiel zwischen der Verschlusswelle und der Lager- und Durchtrittsstelle möglichst gering zu halten, kann die Lager- und Durchtrittstelle mindestens einen zum Gehäuse in radialer Richtung schwimmend angeordneten, die Verschlusswelle mit einem Schiebesitz umfassenden Dichtungsring aufweisen. Der Begriff schwimmend angeordnet bedeutet, dass der Dichtungsring nicht starr vom Gehäuse umfasst wird, sondern in einer Ebene orthogonal zur Mittellängsachse der Verschlusswelle frei verschiebbar gelagert ist. Vorteilhafterweise ist dieser Dichtungsring zwischen dem Gehäuse und dem, dem Gehäuse zugewandten FederEnde angeordnet. Infolge der Abstützung der Feder auf dem Dichtungsring wird dessen axiales Spiel zum Gehäuse aufgehoben, da der Dichtungsring durch die Feder gegen das Gehäuse gepresst wird.

Die Mittellängsachse der Verschlusswelle verläuft im Betriebszustand, das heisst wenn der Dosierkopf in die Dosiervorrichtung eingesetzt ist, vorzugsweise vertikal. Ferner ist die Mittellängsachse des mindestens einen Zufuhrschachts in spitzem Winkel zur Mittellängsachse der Verschlusswelle angeordnet, wobei dessen Winkelweite grösser als 0° und kleiner als 90° ist und dessen Winkelscheitel im Betriebszustand des Dosierkopfs gegen unten gerichtet ist. Durch die Schrägstellung des Zufuhrschachts kann das Dosiergut alleine durch die Wirkung der Schwerkraft vom Entnahmegefäss zur Austrittsöffnung gelangen, sofern der spitze Winkel kleiner ist als der Schüttwinkel des Dosiergutes. Des Weiteren verläuft die Mittellängsachse der Verschlusswelle ausserhalb der mindestens einen Aufnahme. Damit wird erreicht, dass das mindestens eine Entnahmegefäss im Betriebszustand in seiner räumlichen Anordnung mindestens teilweise seitlich der Antriebswelle und/oder der Verschlusswelle angeordnet ist.

Durch diese Ausgestaltung kann das Entnahmegefäss im Bereich der Aufnahme vom Dosierkopf getrennt werden, ungeachtet dessen, ob der Dosierkopf noch in der Dosiervorrichtung eingesetzt ist oder nicht. Die Trennung von Entnahmegefäss und Dosierkopf wird somit ermöglicht, ohne dass eine durch das Entnahmegefäss führende Verschlusswelle dies erschwert. Sinnvollerweise wird aber die Einheit aus Dosierkopf und Entnahmegefäss zuerst aus der Dosiervorrichtung herausgelöst und über Kopf gestellt, so dass die Austrittsöffnung gegen oben gerichtet ist und das verbliebene Dosiergut durch Schütteln in das Entnahmegefäss zurück gelangt um erst danach den entleerten Dosierkopf vom Entnahmegefäss zu trennen. Durch den im spitzen Winkel zur Verschlusswelle angeordneten Zuführschacht kann die Innenkontur derart vorteilhaft ausgestaltet werden, dass der Dosierkopf vor der Trennung vom Entnahmegefäss mit dieser einfachen Methode problemlos entleert werden kann.

Um dies zu erleichtern, kann die Austrittsöffnung mit kreisförmigem Querschnitt versehenen und das Verschlusselement in seiner Grundform zylinderförmig ausgebildet sein. Dadurch entstehen im Bereich des Verschlusselements keine Hinterschnitte, Spalten und Ecken, in denen das Dosiergut hängen bleibt.

Vorzugsweise weist das in seiner Grundform zylinderförmig ausgebildete Verschlusselement mindestens einen dem Verschliessen der Austrittsöffnung dienenden Verschlussbereich und einen diesem benachbart angeordneten der Austragung von zu dosierender Substanz dienenden Austragungsbereich auf, wobei der Austragungsbereich mit mindestens einer vom Zylindermantel ausgehenden Vertiefung versehen ist. Bei dieser Ausführung kann der Verschlussbereich im Betriebszustand oberhalb und/oder unterhalb des Austragungsbereichs angeordnet sein.

Idealerweise ist im Gehäuse eine Aussparung für ein mit der Verschlusswelle verbundenes Rührwerk rotationssymmetrisch zur Mittellängsachse der Verschlusswelle ausgebildet. Diese Aussparung ist zwischen der Austrittsöffnung und dem Zufuhrschacht angeordnet.

Das Rührwerk dient nicht nur zur Auflockerung des Dosierguts und der Verhinderung von Ablagerungen innerhalb des Dosierkopfs. Es kann ebenso die Zuführung des Dosiergutes zur Austrittsöffnung unterstützen, sofern es zumindest einen Rührflügel aufweist, dessen Kreisbahn um die Mittellängsachse der Verschlusswelle am Zufuhrschacht vorbeiführt, wobei der Rührflügel eine, dem Abschälen des aus dem Zufuhrschacht in die Aussparung eintretenden pulver- oder pastenförmigen Dosierguts dienende und gegen die Mittellängsachse und/oder zur Austrittsöffnung hin fördernde Flügelstellung aufweist.

Durch die mechanischen Eigenschaften des Dosiergutes können erhebliche Kräfte auf den Rührflügel einwirken. Deshalb sollte der mindestens eine Rührflügel zumindest an zwei Stellen mit der Verschlusswelle und/oder dem Verschlusskörper formschlüssig verbunden sein, damit der Rührflügel ausreichend gegen Deformation geschützt ist. Ferner kann auch der Rührflügel mittels einer im Gehäuse angeordneten Rührflügel-Lagerstelle drehbar gelagert sein. Vorzugsweise weist auch diese Rührflügel-Lagerstelle auch mindestens eine Schabkante, Schabfläche oder Schnittkante auf, mittels welcher in die Lagerstelle eindringendes Dosiergut mittels Rotation aus der Lagerstelle gefördert werden kann.

Um die vorangehend beschriebene Entleerbarkeit des Dosierkopfes nicht zu beeinträchtigen, ist es von Vorteil, wenn sich die Mittellängsachse des mindestens einen Zufuhrschachts und die Mittellängsachse der Verschlusswelle in einem Schnittpunkt schneiden und der Schnittpunkt im Bereich der rotationssymmetrischen Aussparung angeordnet ist.

Da der Füllstand des Pulvers bei aufgefülltem Entnahmegefäss die Lager- und Durchtrittsstelle im Betriebszustand überragt, steht die Lager- und Durchtrittsstelle unter einer Art hydrostatischem Druck, mit dem die Partikel des Dosierguts in die Lager- und Durchtrittsstelle gedrückt werden. Dieser Druck ist im Wesentlichen abhängig von der Konsistenz und der Partikelgrösse des Dosiergutes. Diesem Druck kann teilweise dadurch entgegengewirkt werden, dass im Gehäuse ein rotationssymmetrisch zur Mittellängsachse der Verschlusswelle und gegen die Lager- und Durchtrittsstelle weisender Dom ausgebildet ist. Durch den Dom wird die Lager- und Durchtrittsstelle aus dem direkten Massenstrom des Dosiergutes herausgehalten, was dazu führt, dass weniger im Dosiergut vorhandene, sehr kleine Partikel an der Lager- und Durchtrittsstelle vorbeigeführt werden und damit die Wahrscheinlichkeit sinkt, dass diese sehr kleinen Partikel in die Lager- und Durchtrittsstelle eindringen.

Um das Risiko einer Kontamination des Dosiergutes oder der Umgebung zu minimieren, die Lagerungsdauer des Dosiergutes zu erhöhen oder sofern der Dosierkopf über mehrere Zufuhrschächte und Aufnahmen für Entnahmegefässe verfügt, können einer, mehrere oder alle Zufuhrschächte mit einem von aussen betätigbaren Absperrorgan versehen sein. Dadurch lassen sich einzelne Entnahmegefässe zuschalten. Selbstverständlich kann das Absperrorgan auch der Beeinflussung der Fliessgeschwindigkeit im Zufuhrschacht dienen oder eine zusätzliche Verschlussmöglichkeit darstellen, wenn die zu dosierenden Substanzen im Entnahmegefäss mit aufgesetztem Dosierkopf gelagert werden sollen. Bei geeigneter Werkstoffpaarung und Ausgestaltung, beispielsweise als Drehschieber, lässt sich das Dosiergut innerhalb des Entnahmegefässes sogar gasdicht lagern. Im Gehäuse kann auch noch mindestens ein Gasanschluss angeordnet sein, der über eine gasdurchlässige Verbindung mit dem Zufuhrschacht verbunden ist. Die gasdurchlässige Verbindung kann mindestens eine Bohrung und/oder eine gasdurchlässige Membran sein. Je nach Auslegung dieser Membran wird verhindert, dass Partikel des Dosiergutes in den Gasanschluss gelangen. Bei geeigneter Ausgestaltung kann vermittels des zugeführten Gases die Austragungsleistung an der Austrittsöffnung beeinflusst werden. Ferner kann das zugeführte Gas auch der Aufwirbelung des Dosiergutes dienen, um die Koagulation des Dosiergutes oder ein Anhaften des Dosiergutes an den Wänden des Zufuhrschachtes und des Entnahmegefässes zu minimieren. Durch diesen Gasanschluss kann zur Verlängerung der Lagerfähigkeit des Dosiergutes ein inertes Gas in das Entnahmegefäss eingebracht werden. Je nach Eigenschaften des Inertgases (leichter oder schwerer als das zu verdrängende Medium) kann der Anschluss zwischen dem Absperrorgan und der Austrittsöffnung oder zwischen dem Absperrorgan und der Aufnahme angeordnet sein. Gegebenenfalls kann bei letzterer Ausführung der Gasanschluss auch der Erzeugung eines Vakuums innerhalb des Entnahmegefässes und/oder des Dosierkopfs dienen. Ferner kann im Gehäuse ein zusätzlicher Hohlraum mit einer gasdurchlässigen Verbindung zum Zufuhrschacht vorhanden sein, welche mit einer die Feuchtigkeit adsorbierenden Substanz, beispielsweise Silikagel oder Molekularsieb verfüllt ist.

Pastenförmiges Dosiergut mit kleiner Viskosität oder Pulver mit hoher Rieselfähigkeit können aufgrund des beim Dosiervorgang abnehmenden Füllstandes im Entnahmegefäss einen grossen Einfluss auf die Präzision der Dosiervorrichtung ausüben. Um die Füllstandseffekte auf den Dosiervorgang auszugleichen, kann der mindestens eine Zufuhrschacht eine der Beeinflussung der Fliessgeschwindigkeit des Dosiergutes dienende Engstelle aufweisen. Diese Engstelle kann beispielsweise die Innenkontur einer Venturi-Düse aufweisen, aber auch eine Lochblende, ein Siebeinsatz und dergleichen mehr sein.

Gerade der Einsatz eines oder mehrerer Siebe im Zufuhrschacht kann sehr viele Vorteile aufweisen. Durch das Sieb werden grosse Klumpen im Entnahmegefäss zurückgehalten. Dies schont einerseits den Bereich der Austrittsöffnung vor Verstopfungen, andererseits kann der Anwender sicher sein, dass nur Partikel bis zu einer vorgegebenen Grösse ausdosiert werden. Falls geeignete Mittel wie ein Vibrationserzeuger zur Zerkleinerung dieser Klumpen eingesetzt wird, hilft das Sieb mit, diese Klumpen zu zerkleinern. Bei hintereinander geschalteten Sieben mit abgestuften Querschnitten der Durchbrüche, wird das Dosiergut im Zufuhrschacht nach Partikelgrössen sortiert, wobei zuerst die kleinsten Partikel dosiert werden können. Sobald diese dosiert sind, kann der Siebeinsatz mit den kleinsten Durchbrüchen beispielsweise analog dem Absperrorgan verschwenkt oder seitlich herausgezogen werden. Dadurch werden die nächst grösseren Partikel freigegeben und können dosiert werden. Diese Schritte können mit den nächsten Sieben fortgeführt werden, bis alle Partikel, welche kleiner sind als der maximale Öffnungsquerschnitt der Austrittsöffnung, dosiert worden sind.

Um die Anzahl Siebeinsätze zu verringern, können auch zwei benachbart zueinander angeordnete, gegeneinander verdrehbare, verschwenkbare oder verschiebbare Siebeinsätze im Zufuhrschacht angeordnet sein. Durch diese Anordnung, welche eine Vielzahl einstellbarer Blendenöffnungen aufweist, kann die maximal zu dosierende Partikelgrösse von Null bis hin zum maximalen Querschnitt der Siebdurchbrüche frei wählbar eingestellt werden. Besonders einfach und Raum sparend sind Anordnungen, bei denen durch Verdrehung der Siebeinsätze gegeneinander die Grösse der Blendenöffnungen eingestellt werden kann.

Damit nicht nur eine einzige Ausführung von Entnahmegefässen mit dem Dosierkopf verbunden werden kann beziehungsweise nur eine beschränkte Anzahl unterschiedlicher Dosierköpfe hergestellt werden muss und um eine breite Palette verschiedenster Entnahmegefässe mit unterschiedlichen Anschlussdimensionen verwenden zu können, kann die Aufnahme mit verschieden ausgestalteten Zwischenflanschen als Adapter verbunden werden.

Damit eine einfache Handhabung der Entnahmegefässe beim Einsetzen in die Antriebsvorrichtung beziehungsweise beim Entfernen aus der Antriebsvorrichtung gewährleistet ist, weisen in betriebsbereitem Zustand der Dosiervorrichtung die Antriebswelle und die Verschlusswelle vorzugsweise eine gemeinsame Mittellängsachse auf. Dadurch kann durch einfaches, lineares Verschieben der Antriebswelle der Antrieb von der Verschlusswelle entkoppelt, beziehungsweise mit dieser gekoppelt werden. Dadurch sind auch verschiedenste formschlüssige und kraftschlüssige Kupplungstypen verwendbar wie Klauenkupplungen, Reibkupplungen und dergleichen.

Die Mittellängsachse des in den Dosierkopf eingesetzten Entnahmegefässes kann grundsätzlich in Bezug auf die Mittellängsachse der Verschlusswelle unter einem beliebigen Winkel angeordnet sein. Je nach Ausrichtung der Mittellängsachse muss das Entnahmegefäss jedoch mit zusätzlichen Zufuhrelementen, wie beispielsweise Förderschnecken, ausgerüstet sein, so dass das Dosiergut in den Zufuhrschacht gelangen kann. Um dies zu vermeiden, wird dieser Winkel vorzugsweise so gewählt, dass bei in die Antriebsvorrichtung eingesetztem Dosierkopf rieselfähiges Dosiergut durch die Einwirkung der Schwerkraft zur Austrittsöffnung des Dosierkopfs gelangen kann. Selbstverständlich können auch bei diesen Ausführungen zusätzliche Fördermittel im Entnahmegefäss angeordnet sein, insbesondere wenn stark koagulierendes Dosiergut vom Entnahmegefäss über den Zufuhrschacht an die Austrittsöffnung gefördert werden soll.

In einer ersten vorzugsweisen Ausführung schneiden sich bei in den Dosierkopf eingesetztem Entnahmegefäss die Mittellängsachse des mindestens einen Entnahmegefässes und die Mittellängsachse des zugeordneten, mindestens einen Zufuhrschachts im Bereich der Aufnahme oder des Zwischenflansches in einem Punkt, wobei der Winkel zwischen den Mittellängsachsen beliebig gross sein kann.

In einer zweiten vorzugsweisen Ausführung weist bei in den Dosierkopf eingesetztem Entnahmegefäss das mindestens eine Entnahmegefäss und der zugeordnete, mindestens eine Zufuhrschacht eine gemeinsame Mittellängsachse auf.

In einer dritten vorzugsweisen Ausführung sind bei in den Dosierkopf eingesetztem Entnahmegefäss die Mittellängsachse der Verschlusswelle und die Mittellängsachse des Entnahmegefässes parallel zueinander angeordnet.

Es hat sich gezeigt, dass das Dosiergut besonders gut zur Austrittsöffnung gelangen kann, wenn runde Querschnitte verwendet werden, da dies zu einer Minimierung der Kontaktoberfläche zwischen dem Dosiergut und der Innenkontur des Dosierkopfs bei grösstmöglichem Durchlassquerschnitt führt. Vorzugsweise weist deshalb der Zufuhrschacht in einer Ebene orthogonal zur Mittellängsachse des Zufuhrschachts einen ovalen oder kreisrunden Querschnitt auf.

In einer weiteren Ausführung weist das Entnahmegefäss einen rohrförmigen Körper auf, an dessen erster Öffnung ein in die Aufnahme oder zum Zwischenflansch passender Befestigungsflansch und dessen zweite Öffnung als verschliessbare Einfüllöffnung ausgebildet sind. Ein solches Entnahmegefäss ist wieder auffüllbar, ohne dass es vom Dosierkopf getrennt werden muss. Für sensibles Dosiergut, beispielsweise toxische oder sehr teure Substanzen ist aber die Verwendung von Entnahmegefässen vorzuziehen, welche nur eine Öffnung aufweisen über welche das Entnahmegefäss mit der Aufnahme oder dem Zwischenflansch des Dosierkopfs verbunden werden kann.

Wenn nur sporadisch eine Entnahme von Dosiergut vorgesehen ist und die Einheit aus Dosierkopf und Entnahmegefäss gleichzeitig als Lagergefäss dienen soll, ist es vorteilhaft, wenn der Dosierkopf und/oder das Entnahmegefäss eine Identifikationsmarkierung oder eine Sende/Empfangseinheit mit Datenspeichermodul aufweist und eine vom Dosierkopf und Entnahmegefäss getrennt angeordnete Lese/Schreibvorrichtung vorhanden ist. Über galvanische Verbindungen oder über kabellose Verbindungen können Daten zwischen der Lese/Schreibvorrichtung und dem Datenspeichermodul ausgetauscht werden. Insbesondere eignet sich dafür beispielsweise ein RFID- Tag und eine entsprechende Lese/Schreibvorrichtung. Aber auch ein einfacher Barcode oder Matrixcode am Entnahmegefäss oder Dosierkopf kann der Identifikation des Dosiergutes dienen und durch einen Barcodeleser oder eine Kamera erfasst werden.

Um die Montage zu erleichtern und den RFID- Tag oder um die Identifikationsmarkierung innerhalb des Gehäuses geschützt unterzubringen, wird das Gehäuse des Dosierkopfs vorzugsweise in ein Aussenteil und in eine Einschubeinheit aufgeteilt. An dieser Einschubeinheit ist mindestens die Lager- und Durchtrittstelle ausgebildet. Vor dem Einsetzen der Einschubeinheit in das Aussenteil kann dieses mit der Verschlusswelle, dem Verschlusselement, gegebenenfalls mit dem Rührwerk und der Identifikationsmarkierung oder der Sende/Empfangseinheit mit Datenspeichermodul versehen werden. Bei der Verwendung einer Identifikationsmarkierung ist das Aussenteil zumindest im Bereich dieser Markierung aus transparentem Material gefertigt. Idealerweise ist das komplette Gehäuse aus transparentem Material gefertigt, wodurch von Aussen leicht einsehbar ist, ob und wie viel Dosiergut sich noch im Dosierkopf befindet. Gegebenenfalls kann das transparente Gehäuse mit einer Füllstandsskala versehen sein.

Wie bereits oben ausführlich beschrieben, ist mindestens ein erfindungsgemässer Dosierkopf in eine Dosiervorrichtung für pulver- oder pastenförmiges Dosiergut mit mindestens einer Antriebsvorrichtung starr verbindbar und die Verschlusswelle des mindesten einen Dosierkopfs über mindestens eine Kupplung mit einer Antriebswelle der mindestens einen Antriebsvorrichtung kuppelbar. Im Betriebszustand ist der Dosierkopf unterhalb einer Antriebseinheit der Antriebsvorrichtung angeordnet. Die Austrittsöffnung des Dosierkopfs ist im Betriebszustand vorzugsweise nach unten und die Lager- und Durchtrittsstelle nach oben gerichtet, wobei die Mittellängsachse der Verschlusswelle im Betriebszustand im Wesentlichen vertikal verläuft.

Einzelheiten des erfindungsgemässen Dosierkopfs und der erfindungsgemässen Dosiervorrichtung ergeben sich anhand der Beschreibung der in den Zeichnungen dargestellten Ausführungsbeispiele. Es zeigen:
- Figur 1: eine Dosiervorrichtung in dreidimensionaler Ansicht, mit einem in die Antriebsvorrichtung einsetzten Dosierkopf in einer ersten Ausführung und mit einem Entnahmegefäss, welches mit dem Dosierkopf verbundenen ist, wobei der Dosierkopf und das Entnahmegefäss im Schnitt dargestellt sind und die Mittellängsachsen der Verschlusswelle und des Entnahmegefässes parallel zueinander angeordnet sind;
- Figur 2: einen Dosierkopf in einer zweiten Ausführung in Aufsicht im Schnitt, mit einem Entnahmegefäss, welches über einen Zwischenflansch mit dem Dosierkopf verbunden ist, sowie mit einem ersten Rührwerk und einem schematisch dargestellten, im Zufuhrschacht angeordneten Absperrorgan und einem mit dem Zufuhrschacht verbundener Gasanschluss;
- Figur 3: die Antriebsvorrichtung aus Figur 1 in dreidimensionaler Ansicht, mit einem in die Antriebsvorrichtung einsetzten Dosierkopf in einer dritten Ausführung mit einem ersten Rührwerk und mit einem Entnahmegefäss, welches mit dem Dosierkopf verbundenen ist, wobei der Dosierkopf und das Entnahmegefäss im Schnitt dargestellt sind und im Entnahmegefäss ein zweites Rührwerk angeordnet ist;
- Figur 4: einen Dosierkopf in einer vierten Ausführung in Aufsicht im Schnitt, mit einem Entnahmegefäss, welches direkt mit dem Dosierkopf verbunden ist, wobei die Mittellängsachse des Zufuhrschachtes und des Entnahmegefässes auf einer Linie angeordnet sind, im Zufuhrschacht eine Engstelle angeordnet ist sowie mit einem zusätzlichen Hohlraum im Gehäuse des Dosierkopfs, welcher Hohlraum mit dem Zufuhrschacht verbunden ist und mit einer die Feuchtigkeit aufnehmenden Substanz verfüllt ist,
- Figur 5: einen Dosierkopf in einer fünften Ausführung in dreidimensionaler Ansicht, mit zwei Entnahmegefässen verschiedener Länge und Ausgestaltung;

- Figur 6a: in dreidimensionaler Ansicht eine erste Ausführung des an der Verschlusswelle ausgebildeten Anschlages mit zwei Anfräsungen;
- Figur 6b: in dreidimensionaler Ansicht eine zweite Ausführung des an der Verschlusswelle ausgebildeten Anschlages mit drei Anfräsungen;
- Figur 6c: in dreidimensionaler Ansicht eine dritte Ausführung des an der Verschlusswelle ausgebildeten Anschlages mit einer Rille;
- Figur 6d: in dreidimensionaler Ansicht einen Teil der Lager- und Durchtrittsstelle mit einer Ausnehmung am Gegenanschlag sowie die in der Lager- und Durchtrittsstelle eingebaute, erste Ausführung des an der Verschlusswelle ausgebildeten Anschlages aus Figur 6a;
- Figur 7: den Zufuhrschacht im Schnitt in einer Ebene orthogonal zur Mittellängsachse des Zufuhrschachtes, wobei zwei eng zueinander angeordnete Siebeinsätze im Gehäuse gegeneinander verschiebbar gelagert sind wobei deren Durchbrüche im Wesentlichen im Zufuhrschacht angeordnet sind.

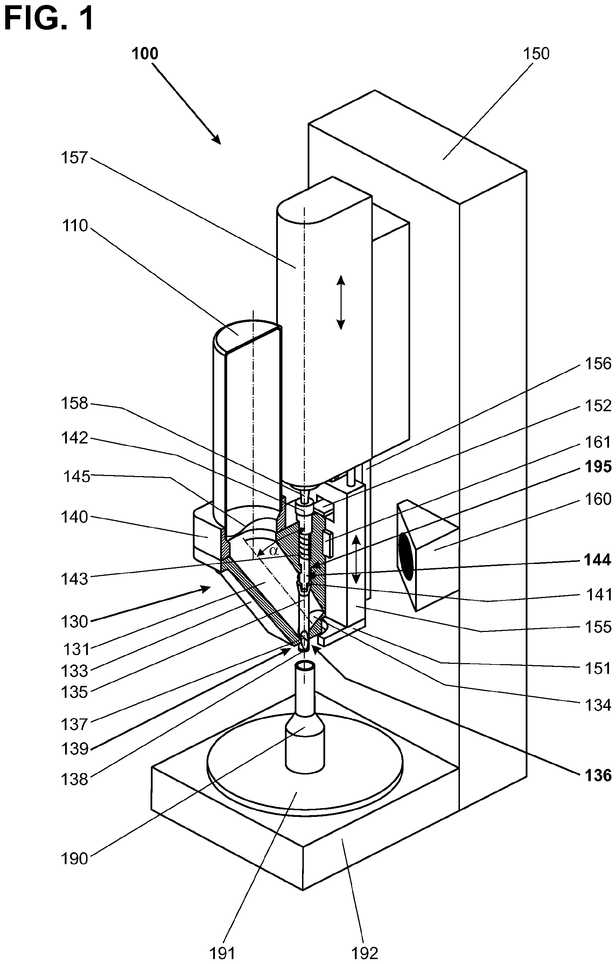

Die Figur 1 zeigt eine Dosiervorrichtung 100, die eine Antriebsvorrichtung 150 aufweist, in welche ein Dosierkopf 130 eingesetzt und aus dieser wieder entfernt werden kann. Mit dem Dosierkopf 130 ist über eine Aufnahme 140 ein Entnahmegefäss 110 lösbar oder fest verbunden. Zwischen der Aufnahme 140 mit einem Durchbruch 145 und einer im Gehäuse 133 des Dosierkopfs 130 ausgebildeten Austrittsöffnung 139 ist ein Zufuhrschacht 131 angeordnet, durch welchen Dosiergut vom Entnahmegefäss 110 zur Austrittsöffnung 139 gelangen kann. Dieser Zufuhrschacht 131 ist zylinderförmig ausgebildet und weist im Bereich der Austrittsöffnung ein ebenes Schachtende 134 auf, wobei die Austrittsöffnung 139, wenn der Dosierkopf 130 in die Antriebsvorrichtung 150 eingesetzt ist, am tiefstgelegenen Punkt des Zufuhrschachtes 131 angeordnet ist, so dass das Dosiergut unter der Einwirkung der Schwerkraft durch die Zufuhrschacht- Wände im Betriebszustand der Dosiervorrichtung 100 zur Austrittsöffnung 139 geleitet wird. Vor dem Verbinden des Entnahmegefässes 110 mit dem Dosierkopf 130 wird das Entnahmegefäss 110 befüllt. Die Montage geschieht "über Kopf" das heisst die Austrittsöffnung 139 des Dosierkopfes 130 und die Öffnung des Entnahmegefässes 110 werden bei der Montage entgegen der im Betriebszustand vorgegebenen Richtung gehalten.

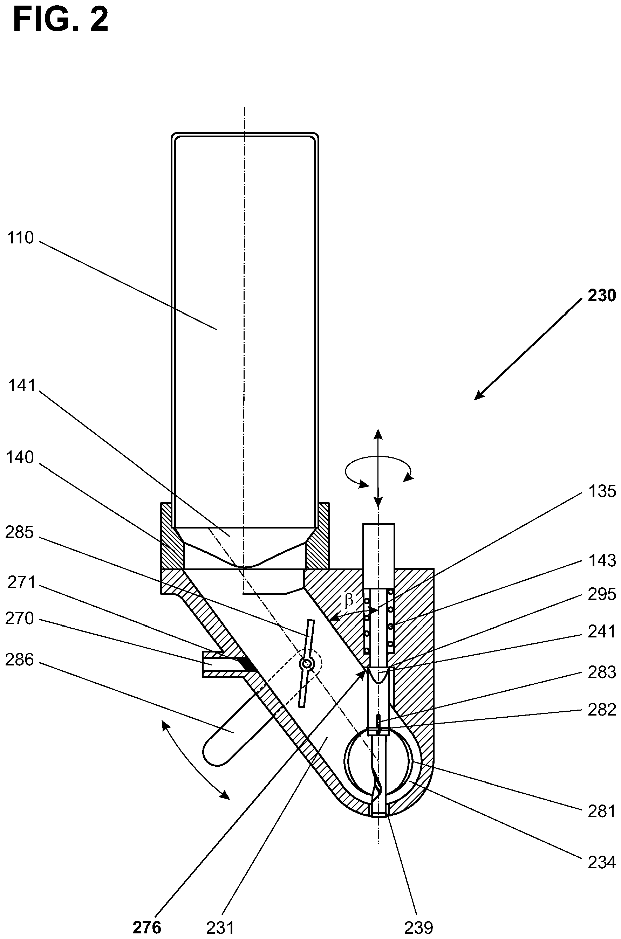

Das Gehäuse 133 des in die Antriebsvorrichtung 150 eingesetzten Dosierkopfs 130 liegt auf einem ersten Halteelement 151 auf, wird durch ein zweites Halteelement 152 gegen das erste Halteelement 151 gepresst und damit in der Antriebsvorrichtung 150 gehalten. Beide Halteelemente 151, 152 sind Bestandteil einer Aufnahmevorrichtung 155, welche über eine senkrecht angeordnete Linearführung 156 mit dem Gehäuse der Antriebsvorrichtung 150 verbunden ist und dadurch in der Höhe verstellbar ist, so dass bei in die Antriebsvorrichtung 150 eingesetztem Dosierkopf 130, Zielgefässe 190 verschiedener Länge unterhalb einer Austrittsöffnung 139 des Dosierkopfs 130 angeordnet werden können. Oberhalb der Aufnahmevorrichtung 155 ist eine Antriebseinheit 157 angeordnet, welche eine Antriebswelle 158 aufweist. Die Antriebseinheit 157 oder zumindest die Antriebswelle 158 ist relativ zur Aufnahmevorrichtung 155 in senkrechter Richtung linear verschiebbar. Im Gehäuse 133 des Dosierkopfs 130 ist eine Lager- und Durchtrittsstelle 144 ausgebildet, durch welche eine Verschlusswelle 135 drehbar und entlang ihrer Mittellängsachse linear verschiebbar gelagert ist. An der Verschlusswelle 135 ist ein Anschlag 141 und am Gehäuse 133 ist ein Gegenanschlag 195 ausgebildet, deren Funktion in der Beschreibung der Figur 2 bis Figur 6d ausführlich erörtert wird.

Die Mittellängsachse der Verschlusswelle 135 ist in spitzem Winkel α zur Mittellängsachse des Zufuhrschachtes 131 angeordnet, wobei der Scheitel des spitzen Winkels α im Wesentlichen gegen die Austrittsöffnung 139 zeigt. Die Verschlusswelle 135 kann nach dem Einsetzen des Dosierkopfs 133 in die Antriebsvorrichtung 150, beziehungsweise in die Aufnahmevorrichtung 155, über eine Kupplung 142 mit der Antriebswelle 158 gekoppelt werden. Selbstverständlich können alle bekannten form- oder kraftschlüssig wirkenden Kupplungen verwendet werden, deren Kupplungshälften auf einfache Weise trennbar sind. Bei der Wahl der Kupplung ist jedoch darauf zu achten, dass zwischen den Kupplungshälften während des normalen Dosierbetriebes keinen Schlupf entsteht, da dies je nach Dosierverfahren die Präzision der Dosiervorrichtung 100 beeinträchtigen kann.

Am gegen die Austrittsöffnung 139 gerichteten Ende der Verschlusswelle 135 ist ein Verschlusselement 136 angeordnet, welches einen zylinderförmigen Verschlussbereich 138 und einen diesem benachbart angeordneten Austragungsbereich 137 aufweist. Das Verschlusselement 136 ragt in die am Gehäuse 133 ausgebildete Austrittsöffnung 139 hinein. Wenn sich der Austragungsbereich 138 in der Austrittsöffnung 139 befindet, kann Dosiergut durch den Querschnitt, welcher durch die Kontur des Austragungsbereichs 138 und den Randbereich der Austrittsöffnung 139 begrenzt wird, ausgetragen werden. Ferner ist die Verschlusswelle 135 mit der Federkraft einer Feder 141 beaufschlagt, so dass die Verschlusswelle 135 beim Entkoppeln von der Antriebswelle 158 selbsttätig den Verschlussbereich 138 in die Austrittsöffnung 139 zurückführt und/oder in dieser hält.

Das Zielgefäss 190 steht auf dem Lastaufnehmer 191 einer Waage 192, deren Elektronik mit der Steuer- und Regelelektronik der Antriebsvorrichtung 150 verbunden ist. Des Weiteren ist im oder am Gehäuse 133 des Dosierkopfs 130 eine Sende/Empfängereinheit 161 mit einem Datenspeichermodul oder eine Identifikationsmarkierung angeordnet, deren Daten von einer Lesevorrichtung erfasst werden oder welcher mit einer Lese/Schreibvorrichtung 160 kommunizieren kann. Dies kann ein Barcode oder Matrixcode sein, welcher durch eine Kamera erfasst werden kann oder ein Datenspeichermodul welches über elektrische Verbindungen oder beispielsweise wie ein RFID- Tag, über eine drahtlose Verbindung mit der Elektronik der Dosiervorrichtung 100 verbunden ist.

Das Entnahmegefäss 110 in Figur 1 weist eine zylindrische Grundform auf. Grundsätzlich sind aber auch andere Entnahmegefäss- Formen mit beispielsweise quadratischem, sechs- oder achteckigem Aussen- und Innenquerschnitt möglich. Wie in Figur 1 dargestellt, ist die Mittellängsachse des Entnahmegefässes 110 durch eine entsprechende Ausgestaltung der Aufnahme 140 parallel zur Mittellängsachse der Verschlusswelle 135 angeordnet. Dies bedeutet nicht, dass eine senkrechte Anordnung des Entnahmegefässes 110 zwingend notwendig ist. Die Mittellängsachse des Entnahmegefässes 110 kann eine beliebige Ausrichtung in Bezug zur Mittellängsachse der Verschlusswelle 135 und/oder der Mittellängsachse des Zufuhrschachtes 131 aufweisen, sofern durch die Anordnung eine durchgehende Verbindung vom Entnahmegefäss 110 über den Zufuhrschacht 131 zur Austrittsöffnung 139 besteht. Sofern im Betriebszustand die Aufnahme 140 oberhalb des am tiefsten liegenden Punktes des Entnahmegefässes 110 liegt, müssen zusätzliche Fördermittel im Entnahmegefäss 110 vorgesehen werden, damit das Dosiergut in den Zufuhrschacht 131 gelangen kann. Der Betriebszustand der Dosiervorrichtung 100 bezogen auf die mechanischen Komponenten ist dann hergestellt, wenn ein Dosierkopf 130 in die Antriebsvorrichtung 150 eingesetzt ist, die Verschlusswelle 135 mit der Antriebswelle 158 gekoppelt ist und ein Entnahmegefäss 110 mit dem Dosierkopf 130 verbunden ist.

In den nachfolgenden Figuren werden für identische Bauteile dieselben Bezugszeichen verwendet. Für diese Teile gelten die Beschreibungen in den vorangehenden Figuren.

Die Figur 2 zeigt einen Dosierkopf 230 in einer zweiten Ausführung in Aufsicht im Schnitt, mit einem Entnahmegefäss 110, welches über einen Zwischenflansch 140 mit dem Dosierkopf 230 verbunden ist. Wie in der Figur 1 ist das Entnahmegefäss 110 über einen Durchbruch 145 im Zwischenflansch und über einen Zufuhrschacht 231 mit der Austrittsöffnung 239 verbunden. An Stelle eines ebenen Schachtendes wie in Figur 1 dargestellt, ist in Figur 2 das Schachtende 234 sphärisch ausgebildet. Dies ermöglicht den Einsatz eines ersten Rührwerks 281, da durch das sphärische Schachtende 234 eine rotationssymmetrisch freier Raum bezogen auf die Mittellängsachse der Verschlusswelle 135 ausgebildet ist. Das Rührwerk 281 ist über eine Ringführung 282 linear verschiebbar an der Verschlusswelle 135 gelagert. Dadurch lässt sich die Verschlusswelle 135 linear verschieben, ohne dass das Rührwerk 281 gegen die Schachtwand des Zufuhrschachtes 231 gepresst wird. Das Drehmoment der Verschlusswelle 135 wird durch eine daran ausgebildete Nut 283 an die Ringführung 282 und damit an das Rührwerk 281 übertragen.

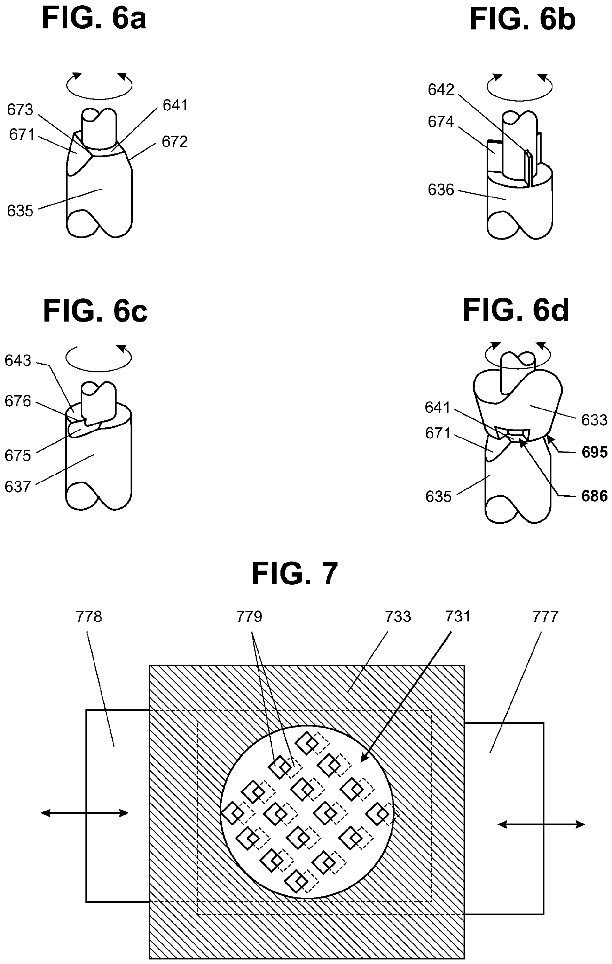

Die Verschlusswelle 135 ist, wie schon in Figur 1 beschrieben, mit der Federkraft einer Feder 143 beaufschlagt, so dass nach dem Entfernen des Dosierkopfs 230 aus der Antriebsvorrichtung das Verschlusselement in der Austrittsöffnung 239 gehalten wird und diese verschliesst. Zwecks eindeutiger Definition dieser Verschlussposition weist die Verschlussachse 135 einen Anschlag 241 auf, welcher durch die Federkraft der Feder 143 gegen einen im Zufuhrschacht 231 ausgebildeten Gegenanschlag 295 gedrückt wird und an diesem Gegenanschlag 295 bei Erreichen der Verschlussposition anliegt. Sobald sich die gewünschte Zielmenge an Dosiergut im Zielgefäss befindet, sollte sich die Austrittsöffnung 239 sicher schliessen lassen. Da sich zwischen dem Anschlag 241 und dem Gegenanschlag 295 Dosiergut festsetzen kann, besteht die Möglichkeit, dass das zwischen den Anschlägen eingeklemmte Dosiergut eine vollständige Schliessung der Austrittsöffnung 239 verhindert. Aus diesem Grund weist der Anschlag 241 eine geeignete Ausgestaltung auf, um das eingeklemmte Dosiergut vermittels Rotation der Verschlusswelle 135 zwischen dem Anschlag 241 und dem Gegenanschlag 295 zu entfernen. Durch die in spitzem Winkel β zur Mittellängsachse der Verschlusswelle angeordnete Schachtwand, wird eine Schälkante 276 im Bereich des Gegenanschlags 295 gebildet. Diese Schälkante 276 dient dem Abschälen des an der Verschlusswelle 135 anhaftenden Dosierguts bei der Verschiebung der Verschlusswelle 135 entlang ihrer Mittellängsachse während eines Schliessvorganges. Zur besseren Darstellung der Schälkante 276 wurde die Ausnehmung zur Bildung des Gegenanschlags 295 in Figur 2 sehr gross gewählt. Sinnvollerweise schliesst sich aber die Ausnehmung eng an die Verschlusswelle 135 an um die Abschälwirkung zu verbessern. Drei mögliche Ausgestaltungen des Anschlags 241 sind in den Figuren 6a bis 6c dargestellt und werden weiter unten ausführlich beschrieben.

Ferner ist im Zufuhrschacht 231 ein schematisch dargestelltes Absperrorgan 285 angeordnet, welches über ein ebenfalls schematisch dargestelltes Betätigungsorgan 286 geöffnet oder geschlossen werden kann. Das Absperrorgan 285 kann in den bekannten Ausgestaltungen wie Hahnreiber, Drehschieber, linearer Schieber und dergleichen ausgebildet sein. Die Funktion des Absperrorgans 285 kann vielfältig sein. So kann es den Durchfluss des Dosierguts bremsen, aber auch das Dosiergut gasdicht gegen die Umgebung abschliessen, wenn die Einheit aus Entnahmegefäss 110 und Dosierkopf 230 gleichzeitig als Lager- und Transportbehälter für das Dosiergut eingesetzt werden soll. Zu diesem Zwecke sollte das Dosiergut, welches im Zufuhrschacht 231 vorhanden ist zuerst in das Entnahmegefäss 110 zurückgeschüttelt werden, bevor das Absperrorgan geschlossen wird.

Auf Umgebungseinflüsse wie eindringende Feuchtigkeit reagierendes Dosiergut muss zwecks seiner Lagerung entsprechend behandelt werden. Aus diesem Grund kann der Zufuhrschacht 231 zusätzlich über einen schematisch dargestellten Gasanschluss 270 verfügen, wobei dieser gegen das Eindringen von Dosiergut durch eine gasdurchlässige Membran 271 abgesichert ist. Durch den Gasanschluss 270 lässt sich der Innenraum des Entnahmegefässes 110 und des Dosierkopfs 230 mit einem Inertgas fluten, wodurch das Eindringen eines anderen gasförmigen Mediums, beispielsweise Luft verhindert werden kann. Selbstverständlich kann das Dosiergut auch durch ein reaktives Gas begast werden, um beispielsweise Reste eines für die Umwelt gefährlichen Dosierguts zwecks Dekontamination des entleerten Entnahmegefässes 110 und Dosierkopfes 230 unschädlich zu machen. Selbstverständlich kann die Membran 271 auch so ausgelegt werden, dass sich Flüssigkeiten in den Zufuhrschacht 231 einleiten lassen um den Dosierkopf 230 zu spülen. Bevor das Dosiergut ausgetragen wird könnte dann mittels rotieren des Rührwerks 281 die Begasung unterstützt werden. Bei geeigneter Ausbildung des Gasanschlusses kann das in den Zufuhrschacht 231 eintretende Gas auch die Förderung pappigen oder klebrigen Dosiergutes im Zufuhrschacht 231 oder den Durchtritt des Dosiergutes durch die Austrittsöffnung 239 unterstützen.

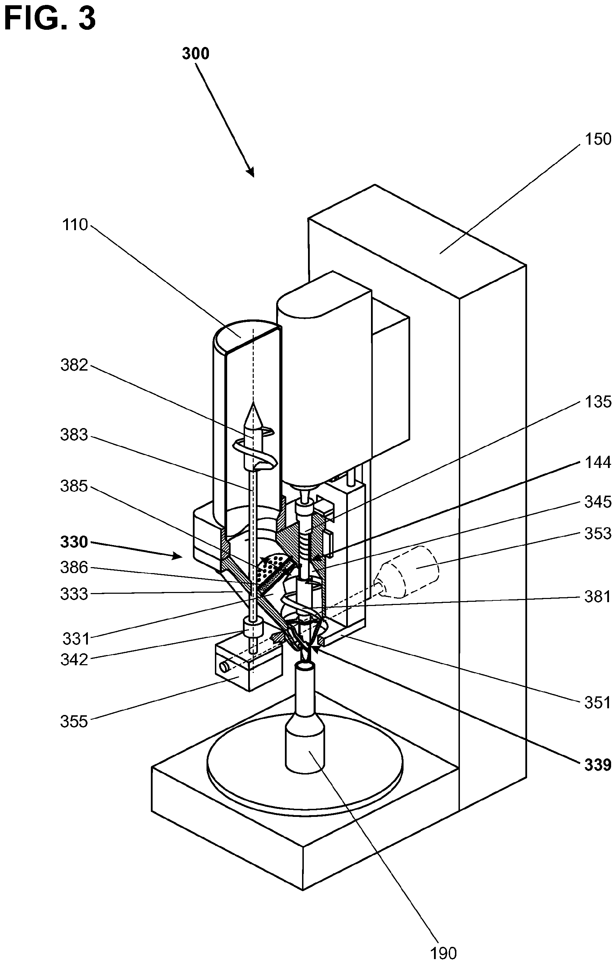

Die Figur 3 zeigt eine Dosiervorrichtung 300, welche die Antriebsvorrichtung 150 aus Figur 1 in dreidimensionaler Ansicht und einen in die Antriebsvorrichtung 150 einsetzten und im Schnitt dargestellten Dosierkopf 330 aufweist. Wie in Figur 1, ist die Dosiervorrichtung in Figur 3 ebenfalls im Betriebszustand dargestellt, wobei die Austrittsöffnung 339 geöffnet ist. In dieser Stellung kann Dosiergut durch die Austrittsöffnung 339 in das Zielgefäss 190 gelangen.

Um für ein grösseres Rührwerk 381 genügend Freiraum zu schaffen, so dass dieses mit der Verschlusswelle 135 um deren Mittellängsachse rotieren kann, ist im Gehäuse 333 ein gegen die Lager- und Durchtrittsstelle 144 weisender Dom 345 ausgebildet. Dieser Dom 345 schützt die Lager- und Durchtrittsstelle 144 zusätzlich vor dem Eindringen von Dosiergut, da der Lagerspalt zwischen der Verschlusswelle 135 und dem Gehäuse 333 nicht direkt im Zufuhrschacht 331 endet und der Lagerspalt dadurch nicht direkt mit dem durch den Zufuhrschacht 331 fliessenden Dosiergut in Berührung kommt. Die Rührflügel des zweiten Rührwerks 381 sind derart ausgebildet, dass das Dosiergut aus dem Zufuhrschacht 331 geschält und gegen die Verschlusswelle 135 und die Austrittsöffnung 339 hin gefördert wird.

Im Zufuhrschacht 331 ist ein erster Siebeinsatz 385 und ein zweiter Siebeinsatz 386 linear und orthogonal zur Mittellängsachse des Zufuhrschachts 331 verschiebbar angeordnet. Die Siebeinsätze 385, 386 verfügen über mehrere Durchbrüche, wobei die Querschnittsfläche der einzelnen Durchbrüche gegen die Austrittsöffnung 339 hin abnimmt. Durch diese Ausgestaltung kann die Partikelgrösse des Dosiergutes während des Dosiervorganges selektiert werden. Durch die Möglichkeit der linearen Verschiebbarkeit der Siebeinsätze 385, 386 orthogonal zur Mittellängsachse des Zufuhrschachts 331, können die einzelnen Partikelgrössekategorien in aufsteigender Reihenfolge ausgewählt werden. Dabei wird durch einen aus dem Zufuhrschacht 331 ganz oder teilweise herausgezogenen Siebeinsatz 385, 386 der Zufuhrschacht 331 im Bereich des jeweiligen Siebeinsatzes für alle Partikelgrössen freigegeben. Zudem lassen sich die Siebeinsätze 385, 386 dadurch auswechseln beziehungsweise reinigen. Es versteht sich von selbst, dass auch mehr als zwei oder nur ein Siebeinsatz verwendet werden kann.

Damit insbesondere klebriges oder pappiges Dosiergut ohne hängen zu bleiben vom Entnahmegefäss 110 über den Zufuhrschacht 331 zur Austrittsöffnung gelangen kann, kann im Entnahmegefäss ein zweites Rührwerk 382 angeordnet sein. Dieses ist mit der im Gehäuse 333 drehbar gelagerten Rührwerkwelle 383 verbunden. Die Rührwerkwelle 383 wird über eine Kupplung 342 mit der Ausgangswelle eines Winkelgetriebekastens 355 verbunden. Der Winkelgetriebekasten 355 ist mit dem ersten Halteelement 351 verbunden, welches zu diesem Zwecke im Vergleich zum in Figur 1 dargestellten ersten Halteelement 151 länger ausgebildet ist. Die Eingangswelle des Winkelgetriebekastens 355 ist mit einem Antriebsmotor 353 verbunden, welcher in Figur 3 schematisch dargestellt ist. Selbstverständlich sind zum Antreiben des zweiten Rührwerks 382 auch andere Antriebskonzepte denkbar, beispielsweise kann an Stelle des Winkelgetriebekastens 355 der Antriebsmotor 353 direkt mit der Rührwerkwelle 383 verbunden sein.

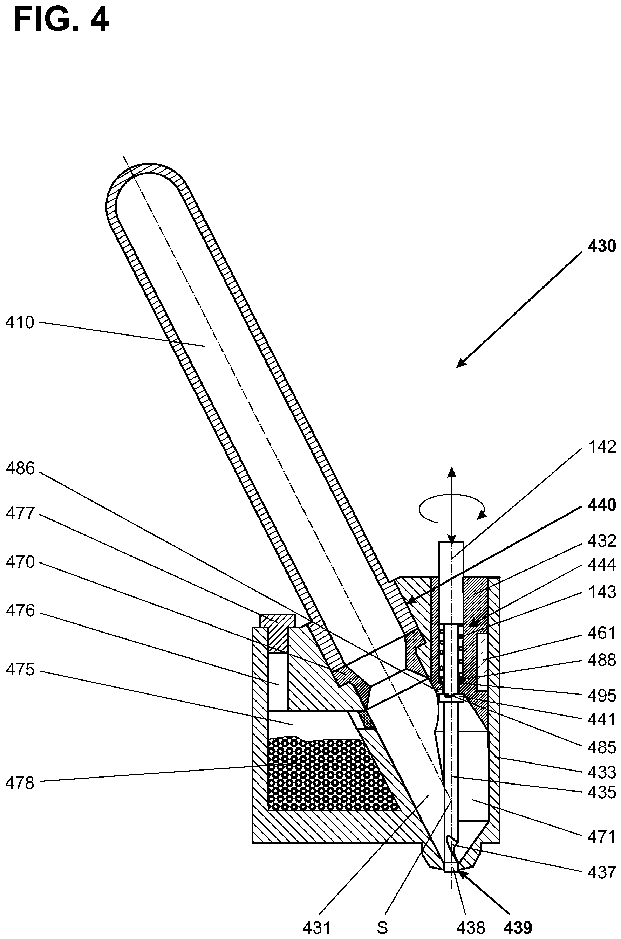

Figur 4 zeigt einen Dosierkopf 430 in einer vierten Ausführung in Aufsicht und im Schnitt. Der Dosierkopf 430 weist ein Gehäuse auf, welches in ein Aussenteil 433 und in eine Einschubeinheit 432 unterteilt ist. Im Aussenteil 433 ist ein Zufuhrschacht 431 ausgebildet. Am Aussenteil 433 ist zudem eine Aufnahme 440 ausgeformt, so dass das Aussenteil 433 und die Aufnahme 440 einstückig ausgebildet sind. Mit der Aufnahme 440 ist ein Entnahmegefäss 410 direkt verbunden, wobei das Entnahmegefässes 410 und der Zufuhrschacht 431 eine gemeinsame Mittellängsachse aufweisen. Eine Verschlusswelle 435 ist in einer Lager- und Durchtrittsstelle 444, welche in der Einschubeinheit 432 ausgebildet ist, drehbar und linear verschiebbar gelagert. Zwischen der Lager- und Durchtrittsstelle 444 und einer Austrittsöffnung 439 ist eine rotationssymmetrische Aussparung 471 ausgebildet, in welcher sich bei Bedarf ein mit der Verschlusswelle 435 verbindbares Rührwerk unterbringen lässt. Der Zufuhrschacht 431 beziehungsweise dessen Schachtwände sind wie in den vorangehenden Figuren in spitzem Winkel zur Verschlusswelle 435 angeordnet, wobei sich die Mittellängsachsen in einem Punkt S schneiden, welcher im Bereich der rotationssymmetrischen Aussparung 471 angeordnet ist. Wie bei den vorangehend beschriebenen Figuren, weist die Verschlusswelle 435 den Verschlussbereich 438 an deren Ende auf, während der Austragungsbereich 437 näher zur Kupplung 142 hin angeordnet ist. Beim Entkoppeln der Verschlusswelle 435 von der Antriebswelle der Dosiervorrichtung, drückt eine Feder 143 einen an der Verschlusswelle ausgebildeten Anschlag 441 gegen einen an der Einschubeinheit 432 ausgebildeten Gegenanschlag 495. Die Anschläge 441, 495 sind derart auf den Verschlussbereich 438 und die Austrittsöffnung 439 abgestimmt, dass bei der gegenseitigen Anlage der Anschläge 441, 495 die Austrittsöffnung 439 durch den Verschlussbereich 438 verschlossen ist. Um an der Verschlusswelle 435 anhaftendes Dosiergut laufend abzuschälen und den Schliessvorgang sicherzustellen, sind am Anschlag 441 eine Rille 485 und am Gegenanschlag 495 eine Ausnehmung 486 ausgebildet. Durch diese Ausgestaltung wird infolge der Rotation der Verschlusswelle 435 das zwischen den Anschlägen 441, 495 angesammelte Dosiergut vom Lagerspalt der Paarung Verschlusswelle 435 / Lager- und Durchtrittsstelle 444 in radialer Richtung wegbefördert.

Um ein Eindringen kleinster Partikel in die Lager- und Durchtrittsstelle 444 zu verhindern, ist zwischen der Feder 143 und der Einschubeinheit 432 ein Dichtungsring 488 schwimmend angeordnet. Somit stützt die Feder 143 am Dichtungsring 488 und nicht direkt an der Einschubeinheit 432 ab. Der Innendurchmesser des Dichtungsrings 488 ist auf den Wellendurchmesser der Verschlusswelle 435 abgestimmt, so dass zwischen den beiden Teilen ein eng tolerierter Schiebesitz besteht. Das vorhandene Spiel im Schiebesitz ist so klein, dass auch feinste Partikel nicht eindringen können. Der Aussendurchmesser des Dichtungsrings 488 ist deutlich kleiner gehalten als der Innendurchmesser der Stufenbohrung der Lager- und Durchtrittsstelle 444. Der dadurch zur Einschubeinheit 432 schwimmend angeordnete Dichtungsring 488 vermag radialen Auslenkungen der Verschlusswelle 435 infolge fertigungsbedingter Exzentrizitäten, gekrümmter Drehachsen und elastischer Deformationen der Verschlusswelle 435 und der Lager- und Durchtrittsstelle 444 problemlos zu folgen. Das axiale Spiel des Dichtungsrings 488 zur Einschubeinheit 432 wird mittels der Federkraft der Feder 143 aufgehoben.

Ferner ist im Zufuhrschacht 431 eine Engstelle 470 angeordnet, um zu verhindern, dass sich Dosiergut mit einer sehr hohen Fliessfähigkeit beim Dosiervorgang zu schnell in das Zielgefäss ergiesst. Durch diese Massnahme kann der Steuer- und Regeleinrichtung der Dosiervorrichtung die erforderliche Reaktionszeit zur Verfügung gestellt werden. Des Weiteren ist im Gehäuse 433 ein Hohlraum 475 ausgebildet, welcher über eine Einfüllöffnung 476 mit einer die Feuchtigkeit aufnehmenden Substanz 478 verfüllt ist. Die Einfüllöffnung 476 ist mit einem Stopfen 477 hermetisch verschlossen. Der Hohlraum ist über eine gasdurchlässige Verbindung mit dem Zufuhrschacht verbunden. Durch diese Anordnung kann dem Dosiergut die Feuchtigkeit entzogen werden oder verhindert werden, dass durch eintretende Feuchtigkeit das Dosiergut beispielsweise Klumpen bildet.

Um die Montage des Dosierkopfs zu erleichtern und die Sende/Empfängereinheit mit Datenspeichermodul 461 ausreichend vor Beschädigungen und Manipulationen zu schützen, kann in der Einschubeinheit 432 wie dargestellt, ein Aufnahmeraum für die Sende/Empfängereinheit mit Datenspeichermodul 461 ausgebildet sein.

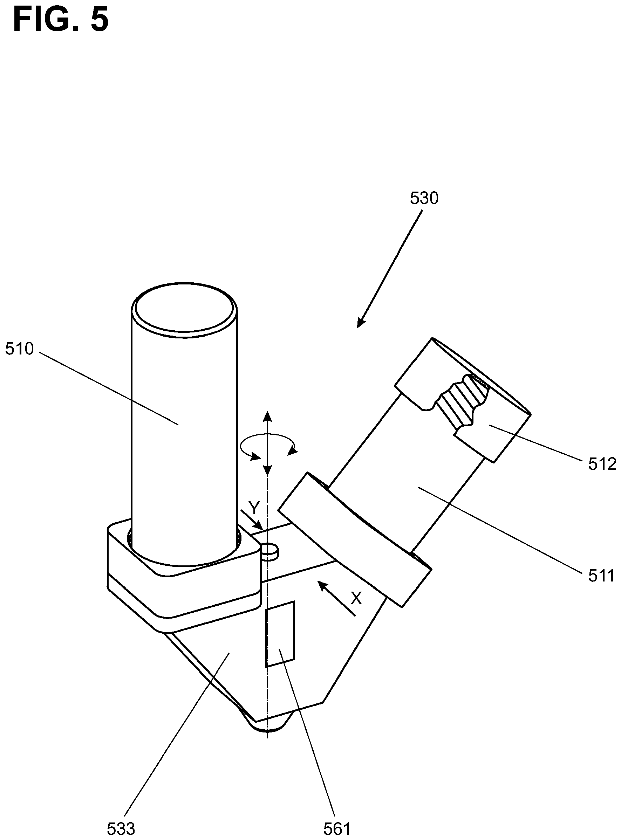

In Figur 5 ist ein Dosierkopf 530 in einer fünften Ausführung in dreidimensionaler Ansicht, mit einem ersten Entnahmegefäss 510 und einem zweiten Entnahmegefäss 511 dargestellt. Die Ausgestaltung innerhalb des Gehäuses 533 entspricht, abgesehen davon dass zwei Zufuhrschächte vorhanden sind, einem der vorangegangenen Ausführungsbeispiele der Dosierköpfe der Figuren 1 bis 4, beziehungsweise kann eine beliebige Kombination der einzelnen, dargestellten Ausführungsmerkmale aufweisen. Es versteht sich von selbst, dass der Dosierkopf 530 mit seinen zwei Entnahmegefässen 510, 511 lediglich in zwei unterschiedlichen Positionen in die Antriebsvorrichtung eingesetzt werden kann und nicht wie die vorangehend beschriebenen Dosierköpfe aus den Figuren 1, 2 und 4, welche grundsätzlich in drei verschiedenen Positionen mit der Antriebsvorrichtung verbunden werden können. Die beiden Pfeile X und Y geben die Anlageflächen an, wobei nur eine dieser Anlageflächen des Gehäuses 533 an der Aufnahmevorrichtung anliegt. Die Sende/Empfängereinheit 561 nimmt bei in die Antriebsvorrichtung eingesetztem Dosierkopf 533 dieselbe Position ein, wie die Sende/Empfängereinheit 161, welche in Figur 1 dargestellt ist. Selbstverständlich sind auch mehr als zwei Entnahmegefässe pro Dosierkopf denkbar.

Um ein Nachfüllen der Entnahmegefässe auch bei in die Antriebsvorrichtung eingesetztem Dosierkopf zu ermöglichen, weist das zweite Entnahmegefäss 511 an dem, dem Dosierkopf 533 entgegengesetzten Ende einen Verschlussdeckel 512 auf. Selbstverständlich können in allen vorangehend beschriebenen Beispielen die Entnahmegefässe ebenfalls einen Verschlussdeckel 512 zwecks Be- oder Nachfüllung aufweisen. Sofern der Dosierkopf wie in Figur 2 dargestellt mit in den Zufuhrschächten angeordneten Absperrorganen ausgestattet ist, lassen sich die einzelnen Entnahmegefässe beliebig zu- und abschalten.

Die Figuren 6a bis 6c zeigen verschiedene Ausführungen des an der Verschlusswelle ausgebildeten Anschlages in dreidimensionaler Ansicht, Figur 6d zeigt eine mögliche Ausgestaltung eines Gegenanschlags in Verbindung mit der in Figur 6a gezeigten Ausführung eines Anschlages.

In Figur 6a wird der Anschlag 641 beziehungsweise dessen Anschlagfläche durch eine erste Anfräsung 671 und eine zweite Anfräsung 672 reduziert. Dadurch werden im Bereich des Anschlages 641 Freistellungen und zwei Schabkanten 673 gebildet, durch welche zwischen dem Anschlag 673 und dem in Figur 2 dargestellten Gegenanschlag eingeklemmtes Dosiergut entfernt kann. Unterstützt wird dieser Effekt durch die Rotation der Verschlusswelle 635, wodurch eine Relativbewegung des Anschlages 641 gegenüber dem ortsfesten Gegenanschlag erzeugt wird. Selbstverständlich kann auch nur eine Anfräsung 671 oder können auch mehr als zwei Anfräsungen 671, 672 vorhanden sein.

In Figur 6b ist ein zweites Ausführungsbeispiel dargestellt. Die Anschlagfläche des an der Verschlusswelle 636 ausgebildeten Anschlags 642 wurde bis auf drei dünne Stege reduziert. Durch die nunmehr senkrechten Schabflächen 674 wird im Vergleich zum in Figur 6a dargestellten Ausführungsbeispiel die Betriebssicherheit erheblich gesteigert. Die notwendige Anschlagfläche ergibt sich aus den maximal zulässigen Flächenpressungen des Anschlags und des Gegenanschlags sowie aus der Federkraft der Feder aus Figur 2. Sowohl die in Figur 6a als auch in Figur 6b dargestellten Ausführungsbeispiele sind in ihrer Funktion drehrichtungsunabhängig. Selbstverständlich kann auch hier nur ein Steg beziehungsweise können mehrere Stege vorhanden sein.

Die Anschlagfläche des Anschlags 643 der in der Figur 6c dargestellten Verschlusswelle 637 weist eine Rille 675 auf. Durch die Rille 675 wird eine Schnittkante 676 gebildet, welche im Vergleich zu den vorangehend beschriebenen Ausführungsbeispielen im Entfernen von eingeklemmtem Dosiergut noch einmal leistungsfähiger ist. Jedoch muss darauf geachtet werden, dass der Gegenanschlag nicht abgetragen und zerstört wird. Das Ausführungsbeispiel ist nicht dahingehend limitierend zu verstehen, dass nur eine Rille vorhanden ist. Es können selbstverständlich auch mehrere Rillen ausgebildet sein.

Figur 6d zeigt eine mögliche Ausgestaltung eines Gegenanschlags 695 an einem hier nur teilweise dargestellten Gehäuses 633. Der Gegenanschlag 695 weist eine Ausnehmung 686 auf. Dadurch dass nur eine Ausnehmung 686 am Gegenanschlag 695 ausgebildet ist, kann der gemäss Figur 6a durch Anfräsungen 671 in seiner Fläche reduzierte Anschlag 641 der Verschlusswelle 635 nie in die Ausnehmung 686 fallen und so die Drehbewegung der Verschlusswelle 635 blockieren. Selbstverständlich können auch mehrere Ausnehmungen 686 am Gegenanschlag 695 ausgebildet sein, wichtig ist lediglich, dass die zulässige Flächenpressung des Anschlags 641 beziehungsweise des Gegenanschlags 695 berücksichtigt wird und die Teilung der Ausnehmungen 686 nicht der Teilung der Anfräsungen 671 entspricht.

Die Figur 7 zeigt einen Zufuhrschacht 731 im Schnitt durch ein Gehäuse 733. Die Schnittebene ist orthogonal zur Mittellängsachse des Zufuhrschachtes 731 gewählt. Wie vorangehend in der Figur 3 ausführlich beschrieben, kann der Zufuhrschacht mit Siebeinsätzen versehen sein. Damit nicht mehrere Siebeinsätze angeordnet werden müssen, können auch nur ein erster Siebeinsatz 777 und ein zweiter Siebeinsatz 778 eng zueinander angeordnet und im Gehäuse 733 gegeneinander verschiebbar gelagert sein. Deren Durchbrüche 779 sind im Wesentlichen im Zufuhrschacht 731 angeordnet. Durch das Verschieben der Siebeinsätze 777, 778 werden die einzelnen Durchbrüche teilweise abgedeckt, wobei bei vollständiger Deckungsgleichheit der Durchbrüche 779 die maximale dem Durchbruchquerschnitt entsprechende Partikelgrösse des Dosiergutes durch die Siebeinsätze 777, 778 zur Austragungsöffnung gelangt, während bei vollständiger Abdeckung der Durchbrüche 779 die Siebeinsätze 777, 778 als Absperrorgan dienen. Die in Figur 7 dargestellten Siebeinsätze 777, 778 sind beide relativ zum Gehäuse 733 linear verschiebbar. Dadurch sind beide Siebeinsätze 777, 778 herausnehmbar und reinigbar. Es ist aber auch möglich, dass der erste Siebeinsatz 777 starr mit dem Gehäuse verbunden ist und nur der zweite Siebeinsatz 778 linear verschiebbar ist. Selbstverständlich sind auch Lösungen, bei denen der erste Siebeinsatz 777 gegenüber dem zweiten Siebeinsatz 778 um einen Drehpunkt gedreht oder verschwenkt werden kann in diesem Aspekt der Erfindung mit eingeschlossen.
Selbstverständlich können die verschiedenen, in Figur 1 bis Figur 7 beschriebenen Ausführungen miteinander kombiniert werden, Ebenso können die verschiedenen Ausgestaltungen an Ausnehmungen, Schabkanten, Schnittkanten, Schälkanten und Rillen miteinander kombiniert werden und sowohl am Anschlag, wie auch am Gegenanschlag ausgebildet sein.

### Bezugszeichenliste

- 300, 100: Dosiervorrichtung
- 511, 510, 410, 110: Entnahmegefäss
- 530, 430, 330, 230, 130: Dosierkopf
- 731, 431, 331, 231, 131: Zufuhrschacht
- 733, 633, 533, 333, 133: Gehäuse
- 134: ebenes Schachtende
- 637, 636, 635, 435, 135: Verschlusswelle
- 136: Verschlusselement
- 437, 137: Austragungsbereich
- 438, 138: Verschlussbereich
- 439, 339, 239, 139: Austrittsöffnung
- 440, 140: Aufnahme
- 643, 642, 641, 441, 241, 141: Anschlag
- 342, 142: Kupplung
- 143: Feder
- 444, 144: Lager- und Durchtrittsstelle
- 145: Durchbruch
- 150: Antriebsvorrichtung
- 351, 151: erstes Halteelement
- 152: zweites Halteelement
- 155: Aufnahmevorrichtung
- 156: Linearführung
- 157: Antriebseinheit
- 158: Antriebswelle
- 160: Lese/Schreibvorrichtung
- 561, 461, 161: Sende/Empfängereinheit mit Datenspeichermodul
- 190: Zielgefäss
- 191: Lastaufnehmer
- 192: Waage
- 695, 495, 295, 195: Gegenanschlag
- 234: sphärisches Schachtende
- 381, 181: erstes Rührwerk

- 282: Ringführung
- 283: Nut
- 285: Absperrorgan
- 286: Betätigungsorgan
- 270: Gasanschluss
- 271: gasdurchlässige Membran
- 276: Schälkante
- 345: Dom
- 353: Antriebsmotor
- 355: Winkelgetriebeeinheit
- 382: zweites Rührwerk
- 383: Rührwerkwelle
- 777, 385: erster Siebeinsatz
- 778, 386: zweiter Siebeinsatz
- 432: Einschubeinheit
- 433: Aussenteil
- 470: Engstelle
- 471: rotationssymmetrische Aussparung
- 475: Hohlraum
- 476: Einfüllöffnung
- 477: Stopfen
- 478: Feuchtigkeit aufnehmende Substanz
- 479: gasdurchlässige Verbindung
- 675, 485: Rille
- 686, 486: Ausnehmung
- 488: Dichtungsring
- 512: Verschlussdeckel
- 671: erste Anfräsung
- 672: zweite Anfräsung
- 673: Schabkante
- 674: Schabfläche
- 676: Schnittkante
- 779: Durchbruch

## Patentansprüche

1. Dosierkopf (130, 230, 330, 430, 530) für Pulver- oder pastenförmiges Dosiergut, mit einem Gehäuse (133, 333, 533, 633, 733), welches eine Austrittsöffnung, (139, 239, 339, 439) eine Lager- und Durchtrittsstelle (144, 444) und mindestens eine am Gehäuse (133, 333, 533, 633, 733) ausgebildete oder damit verbundenen Aufnahme (140, 440) zur Verbindung mindestens eines Entnahmegefässes (110, 410, 510, 511) mit dem Dosierkopf (130, 230, 330, 430, 530) aufweist, wobei im Gehäuse (133, 333, 533, 633, 733) zur Verbindung der mindestens einen Aufnahme (140, 440) mit der Austrittsöffnung (139, 239, 339, 439) mindestens ein Zufuhrschacht (131, 231, 331, 431, 731) ausgebildet ist, sowie in der Lager- und Durchtrittsstelle (144, 444) eine Verschlusswelle (135, 435, 635, 636, 637) um ihre Mittellängsachse rotierbar und entlang ihrer Mittellängsachse verschiebbar gelagert ist und die Verschlusswelle (135, 435, 635, 636, 637) mit einem im Bereich der Austrittsöffnung (139, 239, 339, 439) angeordneten Verschlusselement (136) verbunden ist, **dadurch gekennzeichnet, dass** die Verschlusswelle (135, 435, 635, 636, 637) einen die Verschiebung der Verschlusswelle (135, 435, 635, 636, 637) entlang ihrer Mittellängsachse begrenzenden Anschlag (141, 241, 441, 641, 642, 643) aufweist, im Zufuhrschacht (131, 231, 331, 431, 731) ein der Definition der Verschlussposition dienender Gegenanschlag (195, 295, 495, 695) ausgebildet ist, in welcher Verschlussposition der Anschlag (141, 241, 441, 641, 642, 643) am Gegenanschlag (195, 295, 495, 695) anliegt und die Austrittsöffnung (139, 239, 339, 439) durch den Verschlussbereich (438, 138) des Verschlusselements (136) verschlossen ist, und dass am Anschlag (141, 241, 441, 641, 642, 643) und/oder am Gegenanschlag (195, 295, 495, 695) mindestens eine der Entfernung von Dosiergut dienende Ausnehmung (486, 686), Schälkante (276), Schabkante (673), Schabfläche (674) oder Schnittkante(676) ausgebildet ist.

2. Dosierkopf (130, 230, 330, 430, 530) nach Anspruch 1, **dadurch gekennzeichnet, dass** die Verschlusswelle (135, 435, 635, 636, 637) mit einer im Gehäuse (133, 333, 533, 633, 733) abgestützten Feder (143) beaufschlagt ist, mittels deren Federkraft das Verschlusselement (136) in der Verschlussposition haltbar ist.

3. Dosierkopf (130, 230, 330, 430, 530) nach Anspruch 1 oder 2, **dadurch gekennzeichnet, dass** die Mittellängsachse des mindestens einen Zufuhrschachts (131, 231, 331, 431, 731) in spitzem Winkel α zur Mittellängsachse der Verschlusswelle (135, 435, 635, 636, 637) angeordnet ist, wobei dessen Winkelweite grösser als 0° und kleiner als 90° ist und dessen Winkelscheitel im Betriebszustand in Richtung der Schwerkraft gerichtet ist, dass die Mittellängsachse der Verschlusswelle (135, 435, 635, 636, 637) ausserhalb der mindestens einen Aufnahme (140, 440) verläuft und dass das mindestens eine Entnahmegefäss (110, 410, 510, 511) im Betriebszustand in seiner räumlichen Anordnung mindestens teilweise seitlich der Antriebswelle (158) und/oder der Verschlusswelle (135) angeordnet ist.

4. Dosierkopf (130, 230, 330, 430, 530) nach einem der Ansprüche 1 bis 3, **dadurch gekennzeichnet, dass** in der Lager- und Durchtrittstelle (144, 444) mindestens ein, zum Gehäuse (133, 333, 533, 633, 733) in radialer Richtung schwimmend angeordneter und die Verschlusswelle (135, 435, 635, 636, 637) mit einem Schiebesitz umfassender Dichtungsring (488) angeordnet ist.

5. Dosierkopf (130, 230, 330, 430, 530) nach einem der Ansprüche 1 bis 4, **dadurch gekennzeichnet, dass** im Gehäuse (133, 333, 533, 633, 733) eine zwischen der Austrittsöffnung (139, 239, 339, 439) und dem Zufuhrschacht (131, 231, 331,431, 731) angeordnete Aussparung (471) für ein mit der Verschlusswelle (135, 435, 635, 636, 637) verbundenes Rührwerk (181, 381) rotationssymmetrisch zur Mittellängsachse der Verschlusswelle (135, 435, 635, 636, 637) ausgebildet ist.

6. Dosierkopf (130, 230, 330, 430, 530) nach Anspruch 5 **dadurch gekennzeichnet, dass** das Rührwerk (181, 381) zumindest einen Rührflügel aufweist, dessen Kreisbahn um die Mittellängsachse der Verschlusswelle (135, 435, 635, 636, 637) am Zufuhrschacht (131, 231, 331,431, 731) vorbeiführt, wobei der Rührflügel eine, dem Abschälen des aus dem Zufuhrschacht (131, 231, 331,431, 731) in die Aussparung (471) eintretenden pulver- oder pastenförmigen Dosierguts dienende und gegen die Mittellängsachse und/oder zur Austrittsöffnung (139, 239, 339, 439) hin fördernde Flügelstellung aufweist.

7. Dosierkopf (130, 230, 330, 430, 530) nach einem der Ansprüche 1 bis 6, **dadurch gekennzeichnet, dass** der mindestens eine Zufuhrschacht (131, 231, 331,431, 731) mit einem von aussen betätigbaren Absperrorgan (285) versehen ist.

8. Dosierkopf (130, 230, 330, 430, 530) nach einem der Ansprüche 1 bis 7, **dadurch gekennzeichnet, dass** im Gehäuse (133, 333, 533, 633, 733) mindestens ein Gasanschluss (270) angeordnet ist, der über eine gasdurchlässige Verbindung (271) mit dem Zufuhrschacht (131, 231, 331,431, 731) verbunden ist.

9. Dosierkopf (130, 230, 330, 430, 530) nach einem der Ansprüche 1 bis 8, **dadurch gekennzeichnet, dass** im Gehäuse (133, 333, 533, 633, 733) ein zusätzlicher Hohlraum (475) mit einer gasdurchlässigen Verbindung (479) zum Zufuhrschacht (131, 231, 331,431, 731) vorhanden ist, welche mit einer die Feuchtigkeit aufnehmenden Substanz (478) verfüllt ist.

10. Dosierkopf (130, 230, 330, 430, 530) nach einem der Ansprüche 1 bis 9, **dadurch gekennzeichnet, dass** der mindestens eine Zufuhrschacht (131, 231, 331,431, 731) eine der Beeinflussung der Fliessgeschwindigkeit des Dosiergutes dienende Engstelle (470) aufweist.

11. Dosierkopf (130, 230, 330, 430, 530) nach einem der Ansprüche 1 bis 10, **dadurch gekennzeichnet, dass** der mindestens eine Zufuhrschacht (131, 231, 331,431, 731) mindestens einen Siebeinsatz (385, 386) aufweist.

12. Dosierkopf (130, 230, 330, 430, 530) nach einem der Ansprüche 1 bis 11, **dadurch gekennzeichnet, dass** der mindestens eine Zufuhrschacht (131, 231, 331,431, 731) zwei benachbart zueinander angeordnete, gegeneinander verdrehbare, verschwenkbare oder verschiebbare Siebeinsätze (777, 778) aufweist.

13. Dosierkopf (130, 230, 330, 430, 530) nach einem der Ansprüche 1 bis 12, **dadurch gekennzeichnet, dass** verschieden ausgestaltete Aufnahmen (140) als Adapter für Entnahmegefässe (110, 410, 510, 511) mit unterschiedlichen Anschlussdimensionen mit dem Gehäuse (133, 333, 533, 633, 733) verbindbar sind.

14. Dosierkopf (130, 230, 330, 430, 530) nach einem der Ansprüche 1 bis 13, **dadurch gekennzeichnet, dass** im Entnahmegefäss (110, 410, 510, 511) zusätzliche Fördermittel, insbesondere ein zweites Rührwerk (382), vorhanden sind.

15. Dosierkopf (130, 230, 330, 430, 530) nach einem der Ansprüche 1 bis 14, **dadurch gekennzeichnet, dass** das Entnahmegefäss (110, 410, 510, 511) einen rohrförmigen Körper aufweist, an dessen erster Öffnung ein in die Aufnahme (140, 440) passender Befestigungsflansch ausgebildet ist, und dessen zweite Öffnung mit einem Verschlussdeckel (512) verschliessbar ist.

16. Dosierkopf (130, 230, 330, 430, 530) nach einem der Ansprüche 1 bis 15, **dadurch gekennzeichnet, dass** der Dosierkopf (130) und/oder das Entnahmegefäss (110, 410, 510, 511) eine Identifikationsmarkierung oder eine Sende/Empfangseinheit mit Datenspeichermodul (161, 461, 561), insbesondere ein RFID- Tag aufweist und eine vom Entnahmegefäss (110, 410, 510, 511) und vom Dosierkopf (130, 230, 330, 430, 530) getrennt angeordnete Lese/Schreibvorrichtung (160) vorhanden ist.

17. Dosierkopf (130, 230, 330, 430, 530) nach Anspruch 16, **dadurch gekennzeichnet, dass** das Gehäuse (133, 333, 533, 633, 733) ein Aussenteil (433) und eine Einschubeinheit (432) aufweist, an welcher Einschubeinheit (432) mindestens die Lager- und Durchtrittstelle (444, 144) ausgebildet ist und welche Einschubeinheit (432) die Verschlusswelle (135, 435, 635, 636, 637), das Verschlusselement (136), gegebenenfalls das Rührwerk (381, 181) und die Identifikationsmarkierung oder die Sende/Empfangseinheit mit Datenspeichermodul (161, 461, 561) beinhaltet.

18. Dosiervorrichtung (100, 300) für pulver- oder pastenförmiges Dosiergut mit mindestens einer Antriebsvorrichtung (150) und mindestens einem Dosierkopf (130,230,330,430,530) nach einem der Ansprüche 1 bis 17, mit welcher Antriebsvorrichtung (150) der mindestens eine Dosierkopf (130, 230, 330, 430, 530) starr verbindbar ist und die Verschlusswelle (135) des mindesten einen Dosierkopfs (130, 230, 330, 430, 530) über mindestens eine Kupplung (142) mit einer Antriebswelle (158) der mindestens einen Antriebsvorrichtung (150) kuppelbar ist.

## Claims

1. Dispensing head (130, 230, 330, 430, 530) for dosage material in the form of a powder or paste, comprising a housing (133, 333, 533, 633, 733) which has an outlet opening (139, 239, 339, 439), a bearing- and passage area (144, 444), and at least one socket (140, 440) formed on, or connected to, the housing (133, 333, 533, 633, 733) and serving to connect at least one source container (110, 410, 510, 511) to the dispensing head (130, 230, 330, 430, 530), wherein inside the housing (133, 333, 533, 633, 733) at least one feeder chute (131, 231, 331, 431, 731) is formed which serves to connect the at least one socket (140, 440) to the outlet opening (139, 239, 339, 439), wherein further a closure shaft (135, 435, 635, 636, 637) is held in the bearing- and passage area (144, 444) with the freedom to rotate about and to slide along its central longitudinal axis, said closure shaft (135, 435, 635, 636, 637) being connected to a closure element (136) arranged in the area of the outlet opening (139, 239, 339, 439), **characterized in that** the closure shaft (135, 435, 635, 636, 637) comprises a limit stop (141, 241, 441, 641, 642, 643) restricting the displacement of the closure shaft (135, 435, 635, 636, 637) along its central longitudinal axis, that an opposing stop (195, 295, 495, 695) serving to define the closed position is formed in the feeder chute (131, 231, 331, 431, 731), wherein in said closed position the limit stop (141, 241, 441, 641, 642, 643) rests in direct contact against the opposing stop (195, 295, 495, 695) and the outlet opening (139, 239, 339, 439) is closed off by the closure portion (438, 138) of the closure element (136), and that at least one recess (486, 686), peeling edge (276), scraping edge (673), scraping surface (674), or cutting edge (676) serving to remove dosage material is formed on the limit stop (141, 241, 441, 641, 642, 643) and or on the opposing stop (195, 295, 495, 695).

2. Dispensing head (130, 230, 330, 430, 530) according to claim 1, **characterized in that** the closure shaft (135, 435, 635, 636, 637) is force-biased by means of a spring (143) which is seated in the housing (133, 333, 533, 633, 733), wherein through the biasing force of said spring, the closure element (136) can be held in the closed position.

3. Dispensing head (130, 230, 330, 430, 530) according to claim 1 or 2, **characterized in that** the central longitudinal axis of the at least one feeder chute (131, 231, 331, 431, 731) is arranged at an acute angle α to the central longitudinal axis of the closure shaft (135, 435, 635, 636, 637), with the width of the angle α being more than 0° and less than 90°, and with the apex of the angle α being directed downward in the operating state of the device, further **characterized in that** the central longitudinal axis of the closure shaft (135, 435, 635, 636, 637) is located outside of the at least one socket (140, 440), and that the at least one source container (110, 410, 510, 511), in its spatial arrangement in the operating state, is arranged at least partially to the side of the drive shaft (158) and/or the closure shaft (135).

4. Dispensing head (130, 230, 330, 430, 530) according to one of the claims 1 to 3, **characterized in that** at least one seal ring (488) is arranged in the bearing- and passage area (144, 444), said seal ring (488) being free to float in the radial direction relative to the housing (133, 333, 533, 633, 733) and embracing the closure shaft (135, 435, 635, 636, 637) with a sliding seat.

5. Dispensing head (130, 230, 330, 430, 530) according to one of the claims 1 to 4, **characterized in that** inside the housing (133, 333, 533, 633, 733), between the outlet opening (139, 239, 339, 439) and the feeder chute (131, 231, 33, 431, 731), a cavity (471) is formed with rotational symmetry relative to the central longitudinal axis of the closure shaft (135, 435, 635, 636, 637) to accommodate a stirrer device (281, 381) that is connected to the closure shaft (135, 435, 635, 636, 637).

6. Dispensing head (130, 230, 330, 430, 530) according to claim 5, **characterized in that** the stirrer device (281, 381) has at least one stirrer blade whose orbit about the central longitudinal axis of the closure shaft (135, 435, 635, 636, 637) passes by the feeder chute (131, 231, 33, 431, 731), said stirrer blade being set at a position that serves to shave off the dosage material of pulverous or pasty consistency which enters from the feeder chute (131, 231, 33, 431, 731) into the cavity (471) and to move said dosage material towards the central longitudinal axis and/or towards the outlet opening (139, 239, 339, 439).

7. Dispensing head (130, 230, 330, 430, 530) according to one of the claims 1 to 6, **characterized in that** the at least one feeder chute (131, 231, 33, 431, 731) is equipped with a shutter element (285) which can be actuated from the outside.

8. Dispensing head (130, 230, 330, 430, 530) according to one of the claims 1 to 7, **characterized in that** in the housing (133, 333, 533, 633, 733), there is at least one gas supply port (270) arranged, which is connected by way of a gas-permeable connection (271) to the feeder chute (131, 231, 33, 431, 731).

9. Dispensing head (130, 230, 330, 430, 530) according to one of the claims 1 to 8, **characterized in that** in the housing (133, 333, 533, 633, 733), there is an additional hollow space (475) with a gas-permeable connection (479) to the feeder chute (131, 231, 33, 431, 731), said hollow space being filled with a moisture-absorbing substance (478).

10. Dispensing head (130, 230, 330, 430, 530) according to one of the claims 1 to 9, **characterized in that** the at least one feeder chute (131, 231, 33, 431, 731) comprises a constriction (470) which serves to influence the flow velocity of the dosage material.

11. Dispensing head (130, 230, 330, 430, 530) according to one of the claims 1 to 10, **characterized in that** the at least one feeder chute (131, 231, 33, 431, 731) comprises at least one sieve insert (385, 386).

12. Dispensing head (130, 230, 330, 430, 530) according to one of the claims 1 to 11, **characterized in that** the at least one feeder chute (131, 231, 33, 431, 731) comprises two sieve inserts (777, 778) which are arranged adjacent to each other and are capable of being rotated, swiveled, or displaced in a linear movement relative to each other.

13. Dispensing head (130, 230, 330, 430, 530) according to one of the claims 1 to 12, **characterized in that** sockets (140) of different configurations can be connected to the housing (133, 333, 533, 633, 733) to serve as adapters for source containers (110, 410, 510, 511) with differently dimensioned connections.

14. Dispensing head (130, 230, 330, 430, 530) according to one of the claims 1 to 13, **characterized by** having additional feeder means, in particular a second stirrer device (382), in the source container (110, 410, 510, 511).

15. Dispensing head (130, 230, 330, 430, 530) according to one of the claims 1 to 14, **characterized in that** the source container (110, 410, 510, 511) has a tubular body, at whose first opening a fastening flange is formed which fits the socket (140, 440), and whose second opening can be closed with a closure cap (512).

16. Dispensing head (130, 230, 330, 430, 530) according to one of the claims 1 to 15, **characterized in that** the dispensing head (130) and/or the source container (110, 410, 510, 511) has an identification mark or a sender/receiver unit with a data storage module (161, 461, 561), in particular an RFID tag, and further **characterized by** the presence of a read/write device (160) which is arranged in separation from the source container (110, 410, 510, 511) and the dispensing head (130, 230, 330, 430, 530).

17. Dispensing head (130, 230, 330, 430, 530) according to claim 16, **characterized in that** the housing (133, 333, 533, 633, 733) has an outer part (433) and an insert unit (432), wherein at least the bearing- and passage area (444, 144) is formed at said insert unit (432), and wherein the insert unit (432) comprises the closure shaft (135, 435, 635, 636, 637), the closure element (136), in some cases the stirrer device (381, 281), and the identification mark or the sender/receiver unit with the data storage module (161, 461, 561).

18. Dosage-dispensing device (100, 300) for dosage material in the form of a powder or paste, with at least one drive mechanism (150) to which at least one dispensing head (130, 230, 330, 430, 530) according to one of the claims 1 to 17 can be rigidly connected, wherein the closure shaft (135) of the at least one dispensing head (130, 230, 330, 430, 530) can be coupled by way of at least one clutch (142) to a drive shaft (158) of the at least one drive mechanism (150).

## Revendications

1. Tête de dosage (130, 230, 330, 430, 530) pour produit de dosage pulvérulent ou pâteux, avec un boîtier (133, 333, 533, 633, 733) qui présente une ouverture de sortie (139, 239, 339, 439), un point d'appui et de passage (144, 444) et au moins un logement (140, 440) réalisé sur le boîtier (133, 333, 533, 633, 733), ou relié à celui-ci, pour relier au moins un récipient de soutirage (110, 410, 510, 511) à la tête de dosage (130, 230, 330, 430, 530), dans laquelle, pour relier l'au moins un logement (140, 440) à l'ouverture de sortie (139, 239, 339, 439), au moins un puits d'alimentation (131, 231, 331, 431, 731) est réalisé dans le boîtier (133, 333, 533, 633, 733) tout comme au point d'appui et de passage (144, 444), un arbre de fermeture (135, 435, 635, 636, 637) est monté de façon rotative autour de son axe médian longitudinal et déplaçable le long de son axe médian longitudinal et l'arbre de fermeture (135, 435, 635, 636, 637) est relié à un élément de fermeture (136) disposé dans la zone de l'ouverture de sortie (139, 239, 339, 439), **caractérisée en ce que** l'arbre de fermeture (135, 435, 635, 636, 637) présente une butée (141, 241, 441, 641, 642, 643) limitant le déplacement de l'arbre de fermeture (135, 435, 635, 636, 637) le long de son axe médian longitudinal, une contre-butée (195, 295, 495, 695) servant à la définition de la position de fermeture étant réalisée dans le puits d'alimentation (131, 231, 331, 431, 731), dans laquelle position de fermeture la butée (141, 241, 441, 641, 642, 643) repose contre la contre-butée (195, 295, 495, 695) et l'ouverture de sortie (139, 239, 339, 439) est fermée par la zone de fermeture (438, 138) de l'élément de fermeture (136), et qu'au niveau de la butée (141, 241, 441, 641, 642, 643) et/ou de la contre-butée (195, 295, 495, 695), au moins un évidement (486, 686), une arête de pelage (276), une arête de raclage (673), une surface de raclage (674) ou une arête de coupe (676) servant à enlever le produit de dosage est réalisé(e).

2. Tête de dosage (130, 230, 330, 430, 530) selon la revendication 1, **caractérisée en ce que** l'arbre de fermeture (135, 435, 635, 636, 637) est sollicité par un ressort (143), supporté dans le boîtier (133, 333, 533, 633, 733), à l'aide de la force élastique duquel l'élément de fermeture (136) peut être maintenu dans la position de fermeture.

3. Tête de dosage (130, 230, 330, 430, 530) selon la revendication 1 ou 2, **caractérisée en ce que** l'axe médian longitudinal de l'au moins un puits d'alimentation (131, 231, 331, 431, 731) est disposé en angle aigu α par rapport à l'axe médian longitudinal de l'arbre de fermeture (135, 435, 635, 636, 637), dans laquelle son ouverture angulaire est supérieure à 0° et inférieure à 90° et son origine angulaire est orientée en direction de la force de la pesanteur à l'état de fonctionnement, que l'axe médian longitudinal de l'arbre de fermeture (135, 435, 635, 636, 637) s'étend à l'extérieur de l'au moins un logement (140, 440) et que l'au moins un récipient de soutirage (110, 410, 510, 511) est disposé à l'état de fonctionnement dans sa disposition spatiale au moins partiellement latéralement par rapport à l'arbre d'entraînement (158) et/ou à l'arbre de fermeture (135).

4. Tête de dosage (130, 230, 330, 430, 530) selon l'une des revendications 1 à 3, **caractérisée en ce que**, au point d'appui et de passage (144, 444), au moins une bague d'étanchéité (488) disposée de manière flottante en direction radiale par rapport au boîtier (133, 333, 533, 633, 733) et entourant l'arbre de fermeture (135, 435, 635, 636, 637) avec un ajustement gras, est disposée.

5. Tête de dosage (130, 230, 330, 430, 530) selon l'une des revendications 1 à 4, **caractérisée en ce que**, dans le boîtier (133, 333, 533, 633, 733), un évidement (471) disposé entre l'ouverture de sortie (139, 239, 339, 439) et le puits d'alimentation (131, 231, 331, 431, 731) pour un mélangeur-agitateur (181, 381) relié à l'arbre de fermeture (135, 435, 635, 636, 637) est réalisé en symétrie de rotation à l'axe médian longitudinal de l'arbre de fermeture (135,435,635,636,637).

6. Tête de dosage (130, 230, 330, 430, 530) selon la revendication 5, **caractérisée en ce que** le mélangeur-agitateur (181, 381) présente au moins une palette d'agitation dont la trajectoire circulaire autour de l'axe médian longitudinal de l'arbre de fermeture (135, 435, 635, 636, 637) passe à côté du puits d'alimentation (131, 231, 331, 431, 731), dans laquelle la palette d'agitation présente une position de palette servant au pelage du produit de dosage pulvérulent ou pâteux entrant à partir du puits d'alimentation (131, 231, 331, 431, 731) dans l'évidement (471) et assurant l'acheminement contre l'axe médian longitudinal et/ou vers l'ouverture de sortie (139, 239, 339, 439).

7. Tête de dosage (130, 230, 330, 430, 530) selon l'une des revendications 1 à 6, **caractérisée en ce que** l'au moins un puits d'alimentation (131, 231, 331, 431, 731) est doté d'un organe obturateur (285) actionnable depuis l'extérieur.

8. Tête de dosage (130, 230, 330, 430, 530) selon l'une des revendications 1 à 7, **caractérisée en ce qu'**au moins un raccordement au gaz (270) est disposé dans le boîtier (133, 333, 533, 633, 733), lequel est relié via une liaison perméable au gaz (271) au puits d'alimentation (131,231,331,431,731).

9. Tête de dosage (130, 230, 330, 430, 530) selon l'une des revendications 1 à 8, **caractérisée en ce que**, dans le boîtier (133, 333, 533, 633, 733), il y a un espace creux (475) supplémentaire avec une liaison perméable au gaz (479) vers le puits d'alimentation (131, 231, 331, 431, 731), laquelle est remplie avec une substance absorbant l'humidité (478).

10. Tête de dosage (130, 230, 330, 430, 530) selon l'une des revendications 1 à 9, **caractérisée en ce que** l'au moins un puits d'alimentation (131, 231, 331, 431, 731) présente un rétrécissement (470) servant à influencer la vitesse d'écoulement du produit de dosage.

11. Tête de dosage (130, 230, 330, 430, 530) selon l'une des revendications 1 à 10, **caractérisée en ce que** l'au moins un puits d'alimentation (131, 231, 331, 431, 731) présente au moins une plaque-filtre (385, 386).

12. Tête de dosage (130, 230, 330, 430, 530) selon l'une des revendications 1 à 11, **caractérisée en ce que** l'au moins un puits d'alimentation (131, 231, 331, 431, 731) présente deux plaques-filtre (777, 778) disposées au voisinage l'une de l'autre, pouvant tourner, pivoter ou se déplacer l'une par rapport à l'autre.

13. Tête de dosage (130, 230, 330, 430, 530) selon l'une des revendications 1 à 12, **caractérisée en ce que** des logements (140) configurés différemment peuvent être reliés, en tant qu'adaptateurs pour des récipients de soutirage (110, 410, 510, 511) avec différentes dimensions de raccordement, au boîtier (133, 333, 533, 633, 733).

14. Tête de dosage (130, 230, 330, 430, 530) selon l'une des revendications 1 à 13, **caractérisée en ce que**, dans le récipient de soutirage (110, 410, 510, 511), il y a des moyens d'acheminement supplémentaires, en particulier un deuxième mélangeur-agitateur (382).

15. Tête de dosage (130, 230, 330, 430, 530) selon l'une des revendications 1 à 14, **caractérisée en ce que** le récipient de soutirage (110, 410, 510, 511) présente un corps tubulaire au niveau de la première ouverture duquel une bride de fixation adaptable dans le logement (140, 440) est réalisée et dont la deuxième ouverture peut être fermée avec un couvercle de fermeture (512).

16. Tête de dosage (130, 230, 330, 430, 530) selon l'une des revendications 1 à 15, **caractérisée en ce que** la tête de dosage (130) et/ou le récipient de soutirage (110, 410, 510, 511) présente un marquage d'identification ou une unité d'émission/réception avec un module de stockage de données (161, 461, 561), en particulier une balise RFID, et qu'il y a un dispositif de lecture/écriture (160) disposé séparément du récipient de soutirage (110, 410, 510, 511) et de la tête de dosage (130, 230, 330, 430, 530).

17. Tête de dosage (130, 230, 330, 430, 530) selon la revendication 16, **caractérisée en ce que** le boîtier (133, 333, 533, 633, 733) présente une partie extérieure (433) et une unité d'insertion (432), au niveau de laquelle unité d'insertion (432) au moins le point d'appui et de passage (444, 144) est réalisé et laquelle unité d'insertion (432) contient l'arbre de fermeture (135, 435, 635, 636, 637), l'élément de fermeture (136), le cas échéant le mélangeur-agitateur (381, 181) et le marquage d'identification ou l'unité d'émission/réception avec le module de stockage de données (161, 461, 561).

18. Dispositif de dosage (100, 300) pour produit de dosage pulvérulent ou pâteux avec au moins un dispositif d'entraînement (150) et au moins une tête de dosage (130, 230, 330, 430, 530) selon l'une des revendications 1 à 17, avec lequel dispositif d'entraînement (150) l'au moins une tête de dosage (130, 230, 330, 430, 530) peut être reliée de façon rigide et l'arbre de fermeture (135) de l'au moins une tête de dosage (130, 230, 330, 430, 530) peut être couplé via au moins un dispositif d'accouplement (142) avec un arbre d'entraînement (158) de l'au moins un dispositif d'entraînement (150).
